(19) **Europäisches Patentamt / European Patent Office / Office européen des brevets**

(11) **EP 4 460 065 A1**

(12) **EUROPEAN PATENT APPLICATION**

(43) Date of publication:
06.11.2024 Bulletin 2024/45

(21) Application number: 24173079.5

(22) Date of filing: 29.04.2024

(51) International Patent Classification (IPC):
*H04W 16/10* (2009.01) *H04W 88/08* (2009.01)
*H04W 92/20* (2009.01)

(52) Cooperative Patent Classification (CPC):
**H04W 16/10;** H04W 88/085; H04W 92/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.04.2023 US 202363499036 P
26.04.2024 US 202418647412

(71) Applicant: **Mavenir Systems, Inc.
Richardson, TX 75081 (US)**

(72) Inventors:
• **CHHANGTE, Lalhruaizela**
**796001 Aizawl (IN)**
• **TANEJA, Mukesh**
**560037 Bangalore (IN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **METHOD FOR REDUCING INTER-CELL INTERFERENCE IN CELLULAR NETWORKS**

(57)     A Radio Access Network Intelligent Controller determines an appropriate RB allocation policy based on a cell state using a plurality of parameters, where the plurality of RB allocation policies include at least one random RB allocation policy. The policies reduce inter-cell interference in cellular networks.

FIG. 15

**EP 4 460 065 A1**

**Description**

a. Field of the Disclosure

The present disclosure relates to systems and methods for radio access networks. The present disclosure focuses on the design of operation, administration and management of various network elements of 4G and 5G based mobile networks.

a. Description of the Related Art

Conventional RANs were built employing an integrated unit where the entire RAN was processed. Conventional RANs implement the protocol stack (e.g., Physical Layer (PHY), Media Access Control (MAC), Radio Link Control (RLC), Packet Data Convergence Control (PDCP) layers) at the base station (also referred to as the evolved node B (eNodeB or eNB) for 4G LTE or next generation node B (gNodeB or gNB) for 5G NR). In addition, conventional RANs use application specific hardware for processing, which make the conventional RANs difficult to upgrade and evolve.

Cloud-based Radio Access Networks (CRANs) are networks where a significant portion of the RAN layer processing is performed at a baseband unit (BBU), located in the cloud on commercial off the shelf servers, while the radio frequency (RF) and real-time critical functions can be processed in the remote radio unit (RRU), also referred to as the radio unit (RU). The BBU can be split into two parts: centralized unit (CU) and distributed unit (DU). CUs are usually located in the cloud on commercial off the shelf servers, while DUs can be distributed. The BBU may also be virtualized, in which case it is also known as vBBU. Radio Frequency (RF) interface and real-time critical functions can be processed in the remote radio unit (RRU).

For the RRU and DU to communicate, an interface called the fronthaul is provided. 3rd Generation Partnership Project (3GPP) has defined 8 options for the split between the BBU and the RRU among different layers of the protocol stack. There are multiple factors affecting the selection of the fronthaul split option such as bandwidth, latency, implementation cost, virtualization benefits, complexity of the fronthaul interface, expansion flexibility, computing power, and memory requirement. One of the splits recently standardized by O-RAN Alliance is split option 7-2x (Intra-Physical (PHY) layer split). In the uplink (UL), Fast Fourier Transform (FFT), Cyclic Prefix (CP) removal, and possibly prefiltering functions reside in the RU, while the rest of PHY functions reside in the DU. In the downlink (DL), inverse Fast Fourier Transform (iFFT), CP addition, and beamforming functions reside in the RU, the rest of PHY functions reside in the DU. This split has multiple advantages such as simplicity, transport bandwidth scalability, beamforming support, interoperability, support for advanced receivers and inter-cell coordination, lower O-RU complexity, future proof-ness, interface and functions symmetry.

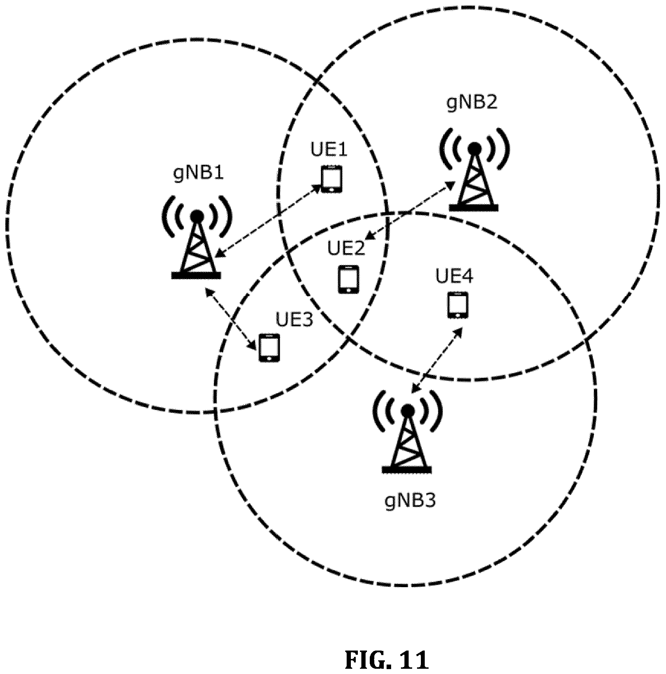

In cellular networks such as 5G, carrier frequencies are re-used across cells to efficiently utilize the radio resources. However, this can result in interference at the cell boundaries and therefore result in reduced performance, i.e., poor reception conditions and low throughput for UEs at the cell boundaries. Figure 11 shows an exemplary network architecture that shows cell edge UEs. The example setup shows three cells (managed by three gNBs-gNB1, gNB2, gNB3 respectively) and four UEs (UE1, UE2, UE3, UE4) that are located in the cell boundaries.

The effects of interference can be minimized using ICIC (Inter Cell Interference Coordination) methods, where information with regards to radio resource allocation can be exchanged between gNBs over Xn interface. However, in the absence of inter-cell coordination between gNBs over Xn interface, there is a need for methods for reducing interference effects. In addition, there is a need to improve methods for ICIC even in the presence of Xn interface between gNBs.

**OVERVIEW OF THE DISCLOSURE**

In implementations, the present disclosure provides a system and methods for reducing interference effects in the absence of inter-cell coordination between gNBs over Xn interface. The different aspects of the implementations are as follows.

Described are implementations of a computer system, computer system components, methods, and computer program products configured to execute program instructions for the method for radio access network, and operation, administration and management of various network elements of 4G, 5G, and further generations of the radio access network system. The method is performed by a computer system that comprises one or more processors and a computer-readable storage medium encoded with instructions executable by at least one of the processors and operatively coupled to at least one of the processors.

In an implementation, described is a method for reducing interference effects in the absence of inter-cell coordination between gNBs over Xn interface comprising: determining, by a near-RT-RIC, an appropriate RB allocation policy from a plurality of RB allocation policies based on a cell state (cellState) value calculated from on a plurality of parameters, wherein the state of the cell includes a cell load and radio conditions for a plurality UEs, and the plurality of RB allocation policies include at least one random RB allocation policy.

The method can further comprise: subscribing, by the near-RT-RIC, to receive a number of the plurality of the parameters from a E2 Node, the E2 Node being a DU or a CU. The method of can further comprise: sending, by the near RT-RIC, an RIC event trigger for an RIC subscription procedure; and sending, in response to the RIC event trigger, the number of the plurality of the parameters from the E2 Node over an E2 interface to determine appropriate RB allocation policy. The method can further comprise implementing different time intervals for sending different parameters of the plurality of the parameters.

The plurality of parameters comprises one or more of:

a Current RB allocation policy used (curRBAllocPolicy) including any one of the plurality RB allocation policies that are available for deployment at the DU;
an Average SINR per RB based on the Current RB allocation policy (avgSinrPerRB), the average SINR per RB being calculated at the RAN when the current RB allocation policy is used;
a Number of connected UEs in a cell (numConnUEs);
a Number of active UEs in a cell (numActiveUEs), the numActiveUEs being the number of RRC connected UEs which have at least one LC/LCG whose Buffer Occupancy (BO) is non-zero;
a Number of UEs in an overlapping area (numOverlapUEs) with other cells; and
a RB utilization (rbUtilize), the rbUtilize being an average percentage of RB utilized in a slot.

The parameters can further comprise on or more of:

the avgSinrPerRB includes a range having a minimum (minSinrPerRB) and a maximum (maxSinrPerRB);
the Number of connected UEs in a cell (numConnUEs) includes a range having a minimum (minNumConnUEs) and a maximum (maxNumConnUEs);
the Number of active UEs in a cell (numActiveUEs) includes a range having minimum minNumActiveUEs and a maximum maxNumActiveUEs, and wherein the maximum maxNumActiveUE equals the maxNumConnUEs (maxNumActiveUEs = maxNumConnUEs);
the determining of the UEs that are in the overlapping cells (numOverlapUEs) includes determining a location of gNBs, a location of the UEs, and a cell radius;
the numOverlapUEs includes a range having minimum minNumOverlapUEs and a maximum maxNumOverlapUEs; and
a RB utilization (rbUtilize) includes a range of 0-100 (0,100).

The parameters can further comprise one or more of:

the maximum Number of active UEs in a cell equals the maximum Number of connected UEs in the cell (maxNumActiveUEs = maxNumConnUEs);
the maximum Number of UEs in an overlapping area equals the maximum Number of connected UEs in the cell (maxNumOverlapUEs = maxNumConnUEs).

The cell state (cellState) value can be calculated from the parameters as:

$$cellState = \frac{(\frac{numOverlapUEsNorm}{sinrPerRBNorm})}{(\alpha \cdot numConnUEsNorm + \beta \cdot numActiveUEsNorm + \gamma \cdot rbUtilizeNorm)}$$

where

$$numOverlapUEsNorm = \frac{(numOverlapUEs - minNumOverlapUEs)}{(maxNumOverlapUEs - minNumOverlapUEs)} \in [0,1]$$

$$numConnUEsNorm = \frac{(numConnUEs - minNumConnUEsNorm)}{(maxNumConnUEsNorm - minNumConnUEsNorm)} \in [0,1]$$

$$numActiveUEsNorm = \frac{(numActiveUEs - minNumActiveUEs)}{(maxNumActiveUEs - minNumActiveUEs)} \in [0,1]$$

$$sinrPerRBNorm = \frac{(sinrPerRB - minSinrPerRB)}{(maxSinrPerRB - minSinrPerRB)} \in [0,1]$$

$$rbUtilizeNorm = \frac{rbUtilize}{100} \in [0,1]$$

$$\alpha + \beta + \gamma = 1.0$$

The randomized RB allocation can be deployed based on the cell state (cellState) value, and wherein the higher a cell state value of the cell state, the more favorable it is to employ a higher degree of randomization in the RB allocation policy. A mapping of cell state values for the randomized RB allocation based on the cell state comprises can include a plurality cell state value ranges including a Low range and a High range. The plurality of cell state value ranges can comprise: the Low range of -> [0-0.33], a Mid range of -> [0.34-0.66], and the High range of -> High [0.67-1].

The method can further comprise: when the parameters are received at the near RT RIC over the E2 interface, calculating the value of cell state; and mapping, by the near-RT RIC, the appropriate RB allocation policy based on the calculated value of the cell state.

The randomized RB allocation policy based on the cell state can comprise:

randomly choosing a starting PRB from a range of PRBs having a uniform distribution and a PRB minimum and a PRB maximum;
continuously allocating the PRBs around the starting PRB; and
randomly selecting the PRBs from the range of PRBs until a total required number of PRBs across all the UEs can be allocated. The method can comprise: continuous allocation of the PRBs around the starting PRB comprises selecting PRB(s) from the left or right of the starting PRB.

The randomized RB allocation policy based on the cell state can comprise:

choosing, for each of a plurality of selected UEs, a starting PRB between two available starting points for the PRBs;

allocating the PRBs from either side of the two chosen starting PRBs; and

continuously randomly allocating the PRBs from the sides of the two starting PRBs if there are more PRBs and UEs.

The RB allocation policy based on the cell state can be chosen to not be random, and comprises: choosing a starting PRB from the beginning of an available bandwidth for the PRBs.

The method can comprise: determining, by the near-RT RIC if the selected RB Policy is currently being deployed, and if not, sending a control message to activate the selected RB policy.

## BRIEF DESCRIPTION OF THE DRAWINGS

Non-limiting and non-exhaustive embodiments are described with reference to the following drawings. In the drawings, like reference numerals refer to like parts throughout the various figures unless otherwise specified. For a better understanding, reference can be configured to be made to the following Detailed Description, which is to be read in association with the accompanying drawings.

Various embodiments and implementations now will be described more fully hereinafter with reference to the accompanying drawings, which form a part hereof, and which show, by way of illustration, specific embodiments by which the innovations described herein can be practiced. The embodiments can, however, be embodied in many different forms and should not be construed as limited to the embodiments and implementations set forth herein; rather, these embodiments and implementations are provided so that this disclosure will be thorough and complete, and will fully convey the scope of the embodiments and implementations to those skilled in the art. Among other things, the various embodiments and implementations can be methods, systems, media, or devices. The following detailed description is, therefore, not to be taken in a limiting sense.

Throughout the specification and claims, the following terms take the meanings explicitly associated herein, unless the context clearly dictates otherwise. The term "herein" refers to the specification, claims, and drawings associated with the current application.

In addition, as used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise. In addition, throughout the specification, the meaning of "a," "an," and "the" include plural references. The meaning of "in" includes "in" and "on."

Figure 1 is a block diagram of a system architecture.

Figure 2 shows an example of a User Plane Stack.

Figure 3 shows an example of a Control Plane Stack.

Figure 4A shows an example of a Separation of CU-CP (CU-Control Plane) and CU-UP (CU-User Plane).

Figure 4B shows an example of a Separation of CU-CP (CU-Control Plane) and CU-UP (CU-User Plane).

Figure 5 shows a DL (Downlink) Layer 2 Structure.

Figure 6 shows an exemplary logical flow for implementing an RB allocation policy.

Figure 7 shows an L2 Data Flow example.

Figure 8A shows an example of an O-RAN architecture.

Figure 8B shows an example of an O-RAN architecture.

Figure 9A illustrates a PDU Session architecture consisting of multiple DRBs.

Figure 9B illustrates a CU and DU view on PDU session, DRBs and GTP-U tunnels for a 5G network architecture.

Figure 10A illustrates an E-UTRAN architecture.

Figure 10B illustrates an EN-DC architecture.

Figure 11 shows exemplary network architecture that shows cell edge UEs.

Figure 12 illsutrates an flow for near-RT-RIC subscribing to some parameters from a DU.

Figure 13 illustates a flow for near-RT-RIC subscribing to parameters from a CU-CP.

Figure 14 shows an example of a selection of a suitable RB allocation policy.

Figure 15 shows an overall flow of control and data.

Figure 16A is a diagram showing an exemplary RB allocation policy.

Figure 16B is a diagram showing an exemplary RB allocation policy.

Figure 16C is a diagram showing an exemplary RB allocation policy.

Figure 17 is a diagram showing an exemplary RB allocation policy.

## DETAILED DESCRIPTION OF THE IMPLEMENTATIONS

Reference is made to Third Generation Partnership Project (3GPP) and the Internet Engineering Task Force (IETF) and related standards bodies in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.

O-RAN.WG4.MP.0-R003-v13.00
3GPP TS 23.501 V 18.1.0 2023-04-05
3GPP TS 38.300 V 17.4.0 03-28-2023
3GPP TS 38.401 V 17.4.0 2023-04-03
3GPP TS 38.501 V 18.1.0 2023-04-05
3GPP TS 38.425 17.3.0, 2023-04-03

*Acronyms*

3GPP: Third generation partnership project
5GC: 5G Core Network
5G NR: 5G New Radio
5QI: 5G QoS Identifier
ACK: Acknowledgement
ACLR: Gain and Adjacent Channel Leakage Ratio
ADC: Analog-to-Digital Converter
AM: Acknowledged Mode
APN: Access Point Name
ARP: Allocation and Retention Priority
ASIC: Application Specific Integrated Circuit
AWGN: Additive White Gaussian Noise
BFW: Beamforming weight
BS: Base Station
CNF: Cloud-Native Network Function
CP: Control Plane
C-RAN: cloud radio access network
CU: Centralized unit
CU-CP: Centralized Unit - Control Plane
CU-UP: Centralized Unit - User Plane
CQI: Channel Quality Indicator
DAC: Digital-to-Analog Converter
DC: Dual Connectivity
DCI: Downlink Control Information
DDDS: DL Data Delivery Status
DFE: Digital Front End
DL: Downlink
DMRS: Demodulation Reference Signal
DNN: Data Network Name
DPS: Data Plane Service
DRB: Data Radio Bearer
DU: Distributed unit
eNB: evolved Node B
eMBB: Enhanced Mobile Broadband
EPC: Evolved Packet Core
EN-DC
EP: Endpoint Pod
E-UTRA: Evolved Universal Terrestrial Radio Access
GBR: Guaranteed Bit Rate
gNB: gNodeB (5G base station)

gRPC: next generation Remote Procedure Call
GTP-U: General Packet Radio Service (GPRS) Tunnelling Protocol - User Plane
GW: Gateway
HA: High Availability
HW: Hardware
IoT: Internet of Things
IP: Internet Protocol
IntfMgr: Interface Manager
IWF: Interworking Function
L1: Layer 1
L2: Layer 2
L3: Layer 3
L4S: Low Latency, Low Loss and Scalable Throughput
LC: Logical Channel
MAC: Medium Access Control
MeNB : Master eNodeB
MIMO: multiple-in multiple-out
MME: Mobility Management Entity
MR-DC: Multi-Radio Dual Connectivity
M-plane: Management plane interface between SMO and O-RU
NACK: Negative Acknowledgement
NAS: Non-Access Stratum
NB: Narrowband
Near-RT RIC: Near-Real-Time RIC
NMS: Network Management System
NR: New Radio
NR-U: New Radio - User Plane
NSA: Non-Standalone Architecture
OFDM: orthogonal frequency-division multiplexing
O-RAN: Open Radio Access Network
PA: Power Amplifier
PDB: Packet Delay Budget
PDCP: Packet Data Convergence Protocol
PDU: Protocol Data Unit
PDCCH: Physical Downlink Control Channel
PDSCH: Physical Downlink Shared Channel
PHY: Physical Layer
PRG: Physical Resource block Group
PUCCH: Physical Uplink Control Channel
PUSCH: Physical Uplink Shared Channel
QCI: QoS Class Identifier
QFI: QoS Flow Id
QFI: QoS Flow Identifier
QoS : Quality of Service
RAT: Radio Access Technology
RB: Resource Block
RDI: Reflective QoS Flow to DRB Indication
RIC: RAN Intelligent Controller
RLC: Radio Link Control
RLC-AM: RLC Acknowledged Mode
RLC-UM: RLC Unacknowledged Mode
RMM: Radio resource management
RQI: Reflective QoS Indication
RRC: Radio Resource Control
RU: Radio Unit
SA: Standalone Architecture
SCTP: Stream Control Transmission Protocol
SDAP: Service Data Adaptation Protocol

S-GW: Serving Gateway

SINR: Signal-to-Interference and Noise Ratio

SMO: Service Management and Orchestration system

SN: Signal Node

SR: Scheduling Request

SRM: Service Resource Management

SRS: Sounding Reference Signal

TCP: Transmission Control Protocol

TEID: Tunnel Endpoint Identifier

U-plane or UP: User plane

UPF: User Plane Function

UE: user equipment

UL: uplink

UM: Unacknowledged Mode

URLLC: Ultra Reliance Low Latency Communication

Described are implementations of technology for a cloud-based Radio Access Networks (RAN), where a significant portion of the RAN layer processing is performed at a central unit (CU) and a distributed unit (DU). Both CUs and DUs are also known as the baseband units (BBUs). CUs are usually located in the cloud on commercial off the shelf servers, while DUs can be distributed. while the RF and real-time critical functions can be processed in the remote radio unit (RU).

*RAN Architectures*

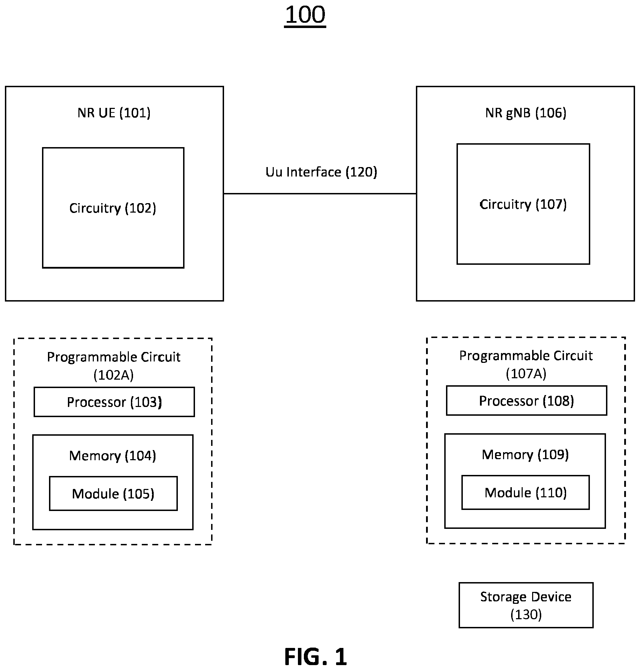

Figure 1 is a block diagram of a system 100 for implementations as described herein. System 100 includes a NR UE 101, a NR gNB 106. The NR UE and NR gNB 106 are communicatively coupled via a Uu interface 120.

NR UE 101 includes electronic circuitry, namely circuitry 102, that performs operations on behalf of NR UE 101 to execute methods described herein. Circuity 102 may be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuity 107 may be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 may be implemented in a random-access memory (RAM), a hard drive, a read only memory (ROM), or a combination thereof. One of the components of memory 109 is a program module, namely module 110. Module 110 contains instructions for controlling processor 108 to execute operations described herein on behalf of NR gNB 106.

The term "module" is used herein to denote a functional operation that may be embodied either as a stand-alone component or as an integrated configuration of a plurality of subordinate components. Thus, each of module 105 and 110 may be implemented as a single module or as a plurality of modules that operate in cooperation with one another.

While modules 110 are indicated as being already loaded into memories 109, and module 110 may be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit consisting of multiple parallel hard drives, (g) a universal serial bus (USB) flash drive, (h) a random-access memory, and (i) an electronic storage device coupled to NR gNB 106 via a data communications network.

Uu Interface (120) is the radio link between the NR UE and NR gNB, which is compliant to the 5G NR specification.

UEs 101 can be dispersed throughout a wireless communication network, and each UE may be stationary or mobile. A UE includes: an access terminal, a terminal, a mobile station, a subscriber unit, a station, etc. A UE can also include be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewelry (e.g., a smart ring, a smart bracelet, etc.), an entertainment device (e.g., a music device, a video device, a satellite radio, etc.), industrial manufacturing equipment, a global positioning system (GPS) device, or any other suitable device configured to communicate via a wireless or wired medium. UEs can include UEs considered as machine-type communication (MTC) UEs or enhanced/evolved MTC (eMTC) UEs. MTC/eMTC UEs that can be implemented as IoT UEs. IoT UEs include, for example, robots/robotic devices, drones, remote devices, sensors, meters, monitors, cameras, location tags, etc., that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network can be a narrowband bandwidth UE. As used herein, devices with limited communication resources, e.g. smaller bandwidth, are considered as narrowband UEs. Similarly, legacy devices, such as legacy and/or advanced UEs can be considered as wideband UEs. Wideband UEs are generally understood as devices that use greater amounts of bandwidth than narrowband UEs.

The UEs 101 are configured to connect, for example, communicatively couple, with an or RAN. In embodiments, the RAN may be an NG RAN or a 5G RAN, an E-UTRAN, an MF RAN, or a legacy RAN, such as a UTRAN or GERAN. The term "NG RAN" or the like refers to a RAN 110 that operates in an NR or 5G system, the term "E-UTRAN" or the like refers to a RAN that operates in an LTE or 4G system, and the term "MF RAN" or the like refers to a RAN that operates in an MF system 100. The UEs 101 utilize connections (or channels), respectively, each of which comprises a physical communications interface or layer. The connections and may can comprise several different physical DL channels and several different physical UL channels. As examples, the physical DL channels include the PDSCH, PMCH, PDCCH, EPDCCH, MPDCCH, R-PDCCH, SPDCCH, PBCH, PCFICH, PHICH, NPBCH, NPDCCH, NPDSCH, and/or any other physical DL channels mentioned herein. As examples, the physical UL channels include the PRACH, PUSCH, PUCCH, SPUCCH, NPRACH, NPUSCH, and/or any other physical UL channels mentioned herein.

The RAN can include one or more AN nodes or RAN nodes. These access nodes can be referred to as BS, gNBs, RAN nodes, eNBs, NodeBs, RSUs, MF-APs, TRxPs or TRPs, and so forth, and comprise ground stations (e.g., terrestrial access points) or satellite stations providing coverage within a geographic area (e.g., a cell). The term "NG RAN node" or the like refers to a RAN node that operates in an NR or 5G system (e.g., a gNB), and the term "E-UTRAN node" or the like refers to a RAN node that operates in an LTE or 4G system (e.g., an eNB). According to various embodiments, the RAN nodes can be implemented as one or more of a dedicated physical device such as a macrocell base station, and/or a low power base station for providing femtocells, picocells or other like cells having smaller coverage areas, smaller user capacity, or higher bandwidth compared to macrocells.

In some embodiments, all or parts of the RAN nodes can be implemented as one or more software entities running on server computers as part of a virtual network, which may be referred to as a CRAN and/or a vBBU. In these embodiments, the CRAN or vBBU may implement a RAN function split, such as a PDCP split wherein RRC and PDCP layers are operated by the CRAN/vBBU and other L2 protocol entities are operated by individual RAN nodes; a MAC/PHY split wherein RRC, PDCP, RLC, and MAC layers are operated by the CRAN/vBBU and the PHY layer is operated by individual RAN nodes; or a "lower PHY" split wherein RRC, PDCP, RLC, MAC layers and upper portions of the PHY layer are operated by the CRAN/vBBU and lower portions of the PHY layer are operated by individual RAN nodes. This virtualized framework allows the freed-up processor cores of the RAN nodes to perform other virtualized applications. In some implementations, an individual RAN node can represent individual gNB-DUs that are connected to a gNB-CU 151 via individual F1 interfaces. In these implementations, the gNB-DUs may include one or more remote radio heads (RRH), and the gNB-CU 151 may be operated by a server that is located in the RAN or by a server pool in a similar manner as the CRAN/vBBU. One or more of the RAN nodes can be next generation eNBs (ng-eNBs), which are RAN nodes that provide E-UTRA user plane and control plane protocol terminations toward the UEs 101, and are connected to a 5GC via an NG interface. In MF implementations, the MF-APs are entities that provide MultiFire radio services, and may be similar to eNBs in an 3GPP architecture.

In some implementations, access to a wireless interface can be scheduled, wherein a scheduling entity (e.g.: BS, gNB, etc.) allocates bandwidth resources for devices and equipment within its service area or cell. As scheduling entity can be configured to schedule, assign, reconfigure, and release resources for one or more subordinate entities. In some examples, a UE 101 (or other device) may function as master node scheduling entity, scheduling resources for one or more secondary node subordinate entities (e.g., one or more other UEs 101). Thus, in a wireless communication network with a scheduled access to time-frequency resources and having a cellular configuration, a P2P configuration, and a mesh configuration, a scheduling entity and one or more subordinate entities may communicate utilizing the scheduled resources.

BS or gNB 106 may be equipped with T antennas and UE 101 may be equipped with R antennas, where in general $T \geq 1$ and $R \geq 1$. At BS, a transmit processor is configured to receive data from a data source for one or more UEs 101 and select one or more modulation and coding schemes (MCS) for each UE based on channel quality indicators (CQIs) received from the UE 101. The BS is configured to process (e.g., encode and modulate) the data for each UE 101 based on the MCS(s) selected for the UE 101, and provide data symbols for all UEs. A transmit processor is also configured to process system information (e.g., for static resource partitioning information (SRPI), etc.) and control information (e.g., CQI requests, grants, upper layer signaling, etc.) and can provide overhead symbols and control symbols. Processor 108 may also generate reference symbols for reference signals (e.g., the cell-specific reference signal (CRS)) and synchronization signals (e.g., the primary synchronization signal (PSS) and the secondary synchronization signal (SSS)). A transmit (TX) multiple-input multiple-output (MIMO) processor can be configured perform spatial processing (e.g., precoding) on the data symbols, the control symbols, the overhead symbols, and/or the reference symbols, if applicable, and can be configured to provide T output symbol streams to T modulators (MODs). Each modulator can be configured to process a respective output symbol stream (e.g., for OFDM, etc.) to obtain an output sample stream. Each modulator can further be configured to process (e.g., convert to analog, amplify, filter, and upconvert) the output sample stream to obtain a downlink signal. T downlink signals from modulators can be transmitted via T antennas.

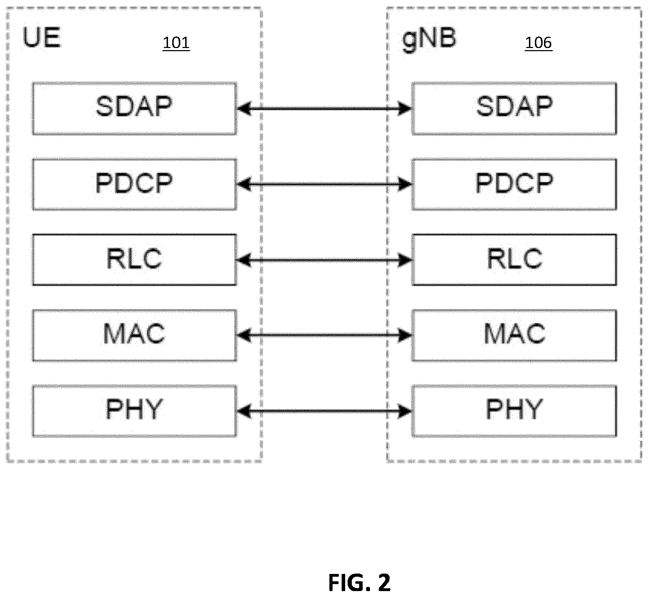

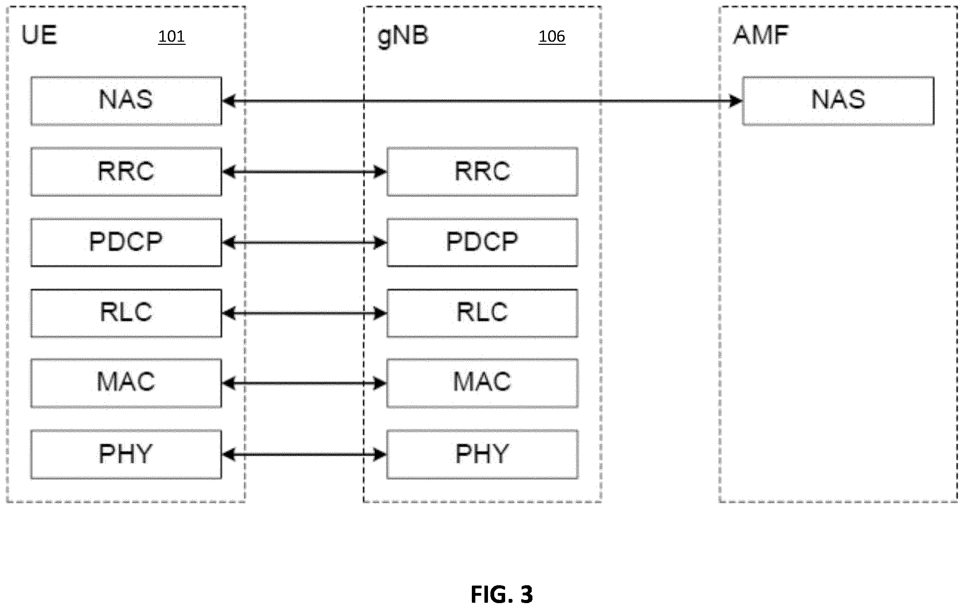

An overview of 5G NR Stacks is as follows. 5G NR (New Radio) user and control plane functions with monolithic gNB 106 are shown in the Figure 2 and Figure 3 . For the user plane, PHY (physical), MAC (Medium Access Control), RLC (Radio Link Control), PDCP (Packet Data Convergence Protocol) and SDAP (Service Data Adaptation Protocol) sublayers are terminated in the gNB 106 on the network side. For the control plane, RRC (Radio Resource Control), PDCP, RLC, MAC and PHY sublayers are terminated in the gNB 106 on the network side and NAS (Non-Access Stratum) is terminated in the AMF (Access Mobility Function) on the network side. Figure 2 shows an example of a User Plane Stack as descried in 3GPP TS 38.300. Figure 3 shows an example of a Control Plane Stack as described in 3GPP TS 38.300.

An NG-RAN (NG-Radio Access Network) architecture from 3GPP TS 38.401 is described below. F1 is the interface between gNB-CU 151 (gNB - Centralized Unit) and gNB-DU 152 (gNB - Distributed Unit), NG is the interface between gNB-CU 151 (or gNB) and 5GC (5G Core), E1 is the interface between CU-CP (CU-Control Plane) and CU-UP (CU-User Plane), and Xn is interface between gNBs.

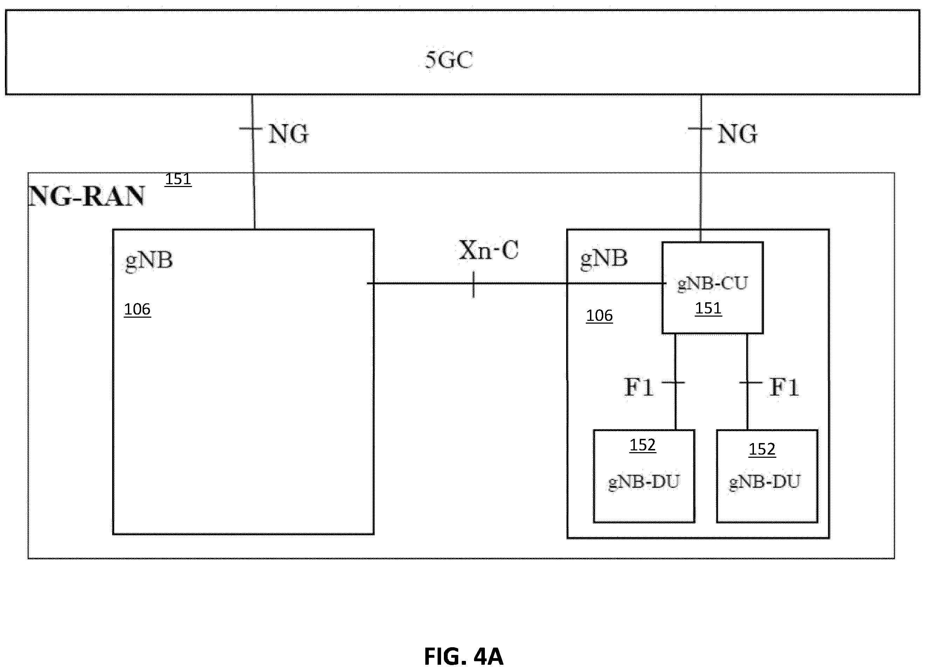

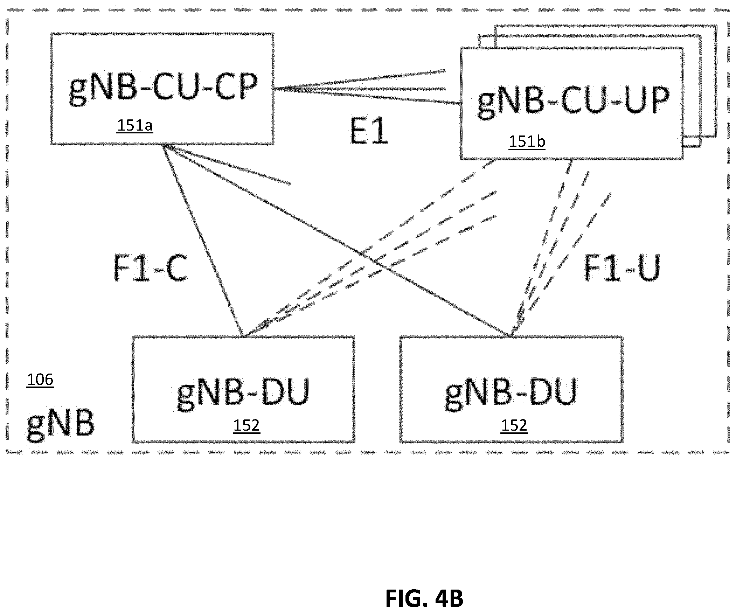

A gNB 106 may consist of a gNB-CU-CP, multiple gNB-CU-UPs and multiple gNB-DUs. The gNB-CU-CP is connected to the gNB-DU 152 through the F1-C interface and to the gNB-CU-UP through the E1 interface. The gNB-CU-UP is connected to the gNB-DU 152 through the F1-U interface and to the gNB-CU-CP through the E1 interface. One gNB-DU 152 is connected to only one gNB-CU-CP 151a and one gNB-CU-UP 151b is connected to only one gNB-CU-CP. Figure 4A shows an example of an NG-RAN Architecture as described in 3GPP TS 38.501. Figure 4B shows an example of a Separation of CU-CP 151a (CU-Control Plane) 151a CU-UP 151b (CU-User Plane) as described in 3GPP TS 38.401.

A Layer 2 (L2) of 5G NR is split into the following sublayers is described in 3GPP TS 38.300):

- ◦ Medium Access Control (MAC): The MAC sublayer offers Logical Channels (LCs) to the RLC sublayer. This layer runs a MAC scheduler to schedule radio resources across different LCs (and their associated radio bearers).

- ◦ Radio Link Control (RLC): The RLC sublayer offers RLC channels to the PDCP sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts ARQ (Automatic Repeat Request) protocol for RLC-AM mode.

- ◦ Packet Data Convergence Protocol (PDCP): The PDCP sublayer offers Radio Bearers (RBs) to the SDAP sublayer. There are two types of Radio Bearers: Data Radio Bearers (DRBs) for data and Signaling Radio Bearers (SRBs) for control plane.

- o Service Data Adaptation Protocol (SDAP): The SDAP offers QoS Flows to the 5GC (5G Core). This sublayer provides mapping between a QoS flow and a DRB. It marks QoS Flow Id in DL (downlink) as well as UL (uplink) packets).

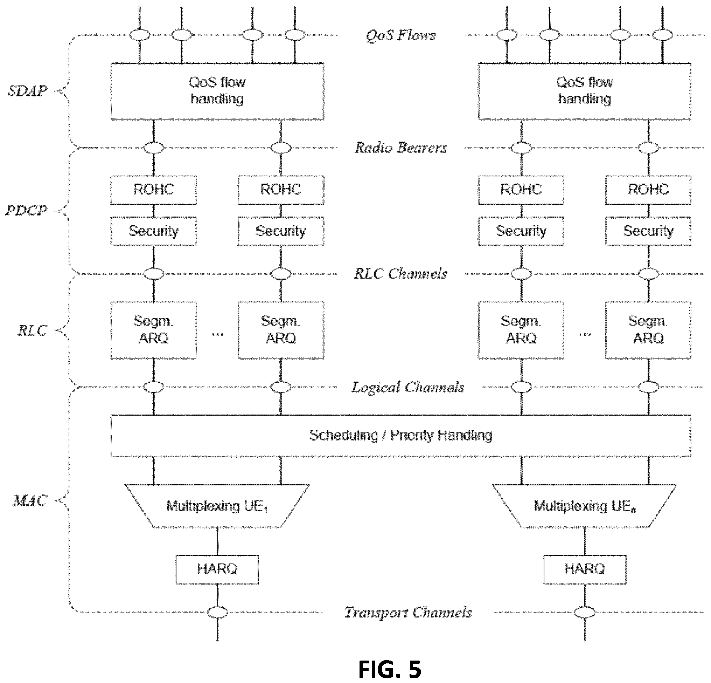

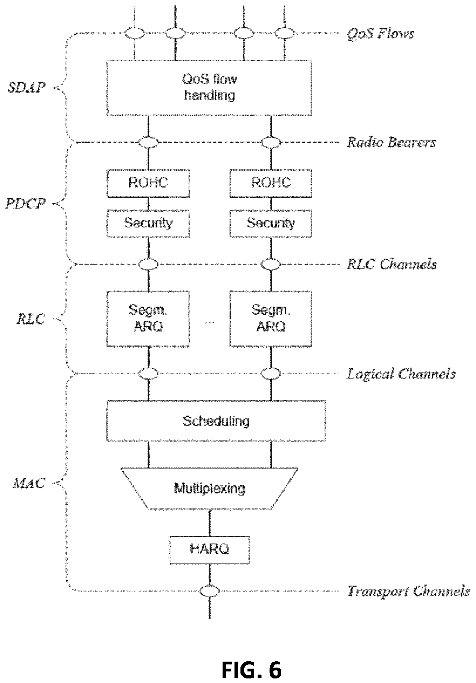

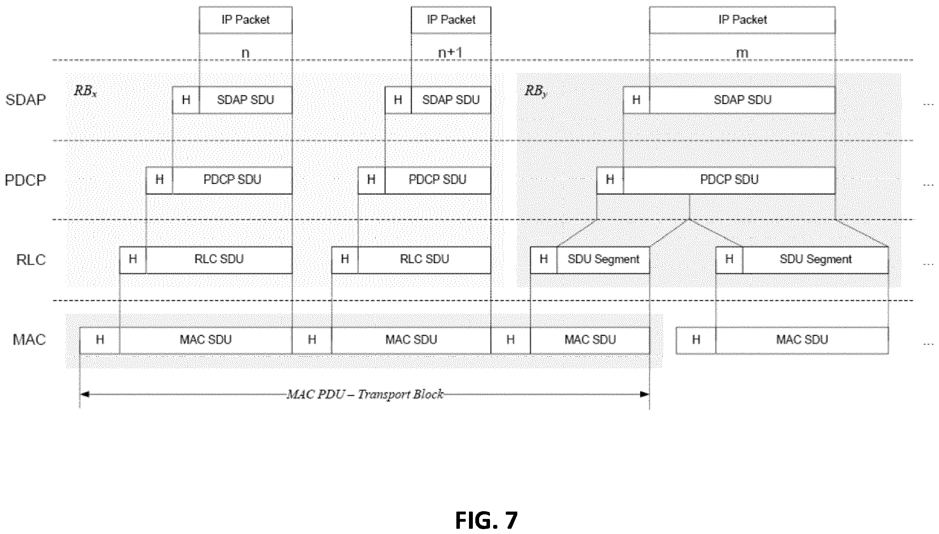

Figure 5 shows a DL (Downlink) Layer 2 Structure as described in 3GPP TS 38.300. Figure 6 shows an UL (uplink) Layer 2 Structure in accord with 3GPP TS38.300. Figure 7 shows an L2 Data Flow example in accord with 3GPP TS 38.300 ([H] denotes headers or subheaders in Figure 7.)

O-RAN, which is based on disaggregated components and connected through open and standardized interfaces is based on 3GPP NG-RAN. An overview of O-RAN with disaggregated RAN (CU, DU, and RU), near-real-time RIC 160 and non-real-time RIC is shown in the figure below. Here, DU (Distributed Unit) and CU (Centralized Unit) are typically implemented using COTS (Commercial off-the-shelf) hardware.

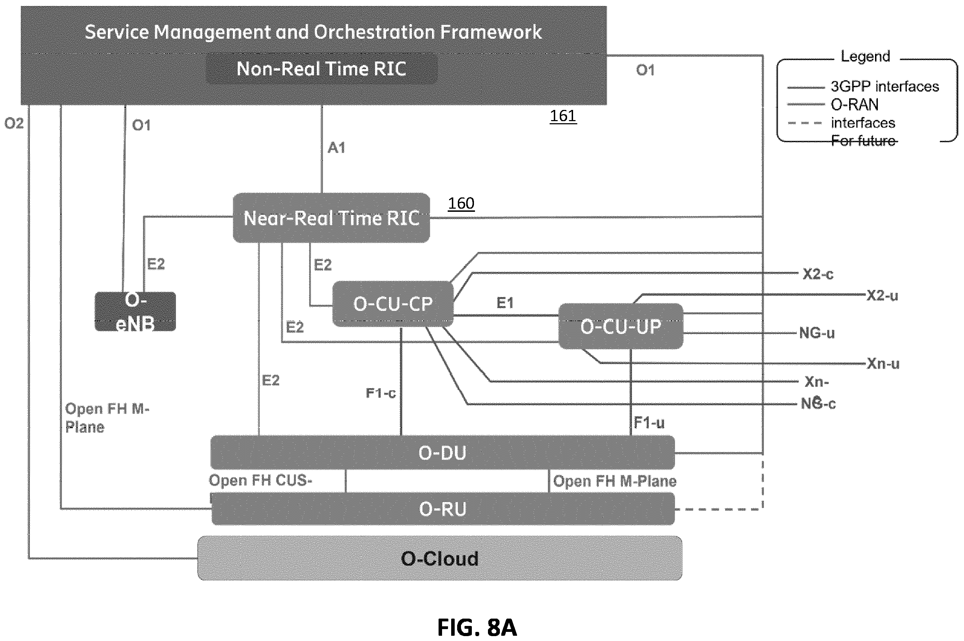

Figures 8A-8B show an example of an O-RAN architecture. In Figure 8A, the CU and the DU are connected using the F1 interface (with F1-C for control plane and F1-U for user plane traffic) over the midhaul (MH) path. One DU could host multiple cells (for example, one DU could host 24 cells) and each cell may support many users. For example, one cell may support 600 RRC Connected users and out of these 600, there may be 200 Active users (i.e.; users which have data to send at a given point of time).

A cell site could consist of multiple sectors and each sector may support multiple cells. For example, one site could consist of three sectors and each sector could support 8 cells (with 8 cells in each sector on different frequency bands). One CU-CP could support multiple DUs and thus multiple cells. For example, a CU-CP could support 1000 cells and around 100,000 UEs. Each UE could support multiple DRBs and there could be multiple instances of CU-UP to serve these DRBs. For example, each UE could support 4 DRBs, and 400,000 DRBs (corresponding to 100,000 UEs) may be served by five CU-UP instances (and one CU-CP instance).

DU can be located in a private data center or it could be located at a cell-site too. CU can also be located in a private data center or even hosted on a public cloud system. DU and CU can be tens of kilometers away. CU can communicate with 5G core system which could also be hosted in the same public cloud system (or could be hosted by a different cloud provider). RU (Radio Unit) is located at cell-site and communicated with DU via a fronthaul (FH) interface.

The E2 nodes (CU and DU) are connected to the near-real-time RIC 160 using the E2 interface. The E2 interface is used to send data (e.g., user, cell, slice KPMs) from the RAN, and deploy control actions and policies to the RAN at near-real-time RIC 160. The application or service at the near-real-time RIC 160 that deploys the control actions and policies to the RAN are called xApps. The near-real-time RIC 160 is connected to the non-real-time RIC 161 using the A1 interface.

SMO manages multiple regional networks, and O-RAN NFs (O-CUs, Near-RT RIC 160, O-DUs) can be deployed in a regional data center which is connected to multiple cell sites or in cell site which is close to localized O-RU according to network requirements. Since SMO Functions and O-RAN NFs are micro services and deployment-independent logical functions, SMO Functions and O-RAN NFs can be composed of multiple deployment instances deployed in the same O-Cloud or in a different O-Cloud in regional data center, or in cell site according to network requirements (ex. capacity, latency, security, and so on) if the secure connection among SMO Functions and O-RAN NFs are available.

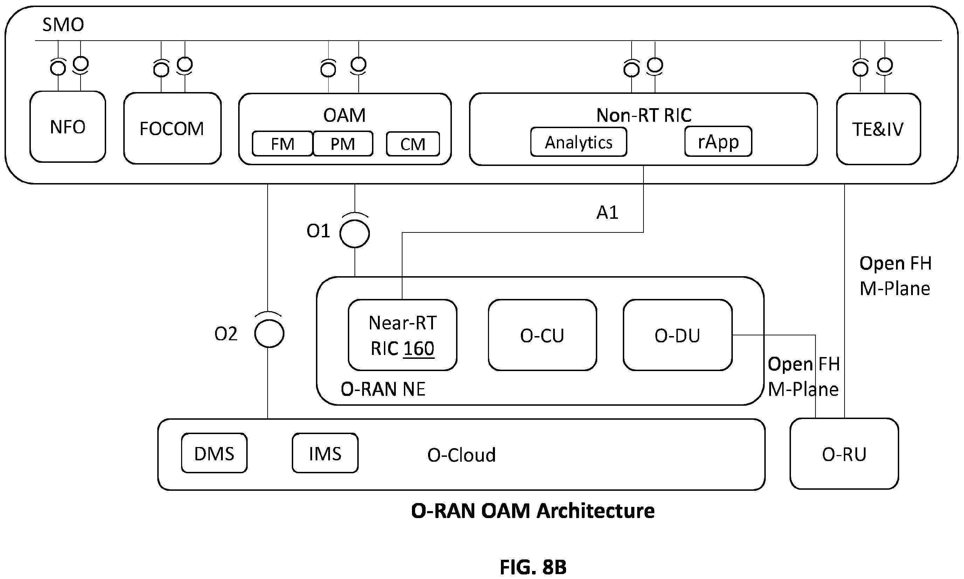

As shown in Figure 8B, an O-RAN compliant SMO defines TE&IV, RAN NF OAM, Non-RT RIC, and NFO, FOCOM services. SMO interacts with O-RAN NFs with O1 interface. SMO interacts with O-RU with Open FH M-Plane interface and interacts O-Cloud via the O2 interface. O-RAN NF OAM manages O-RAN NF CM, FM, PM and creates O-RAN NF inventory and topology in TE&IV. FOCOM/NFO manages O-Cloud resources and creates O-Cloud resources inventory and topology in TE&IV. Analytics/rApp in Non-RT RIC can subscribe O-RAN NFs PM/FM, O-Cloud PM/FM data based on O-RAN NF OAM and FOCOM/NFO. Analytics/rApp in Non-RT RIC can retrieve the O-RAN NF and O-Cloud resource inventory and topology.

PDU Sessions, DRBs, QoS Flows

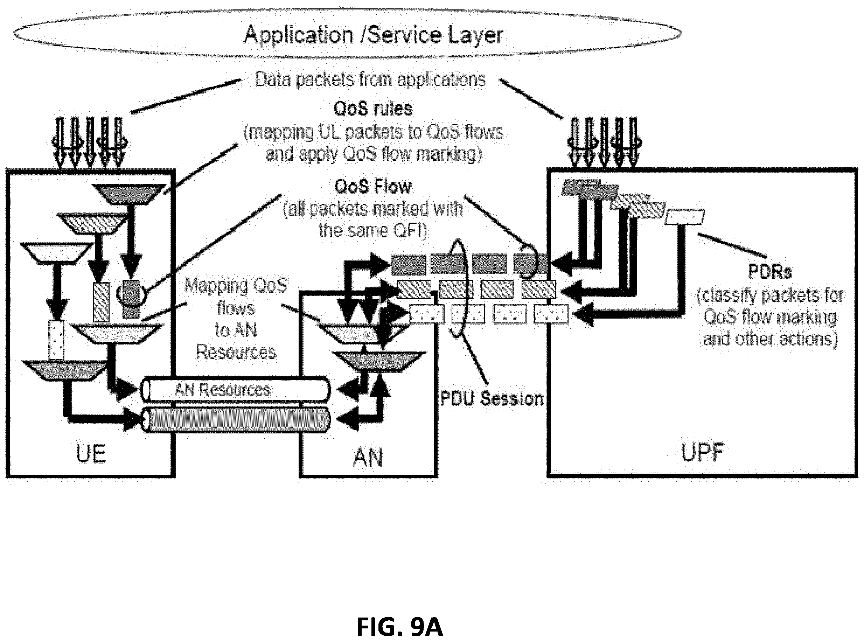

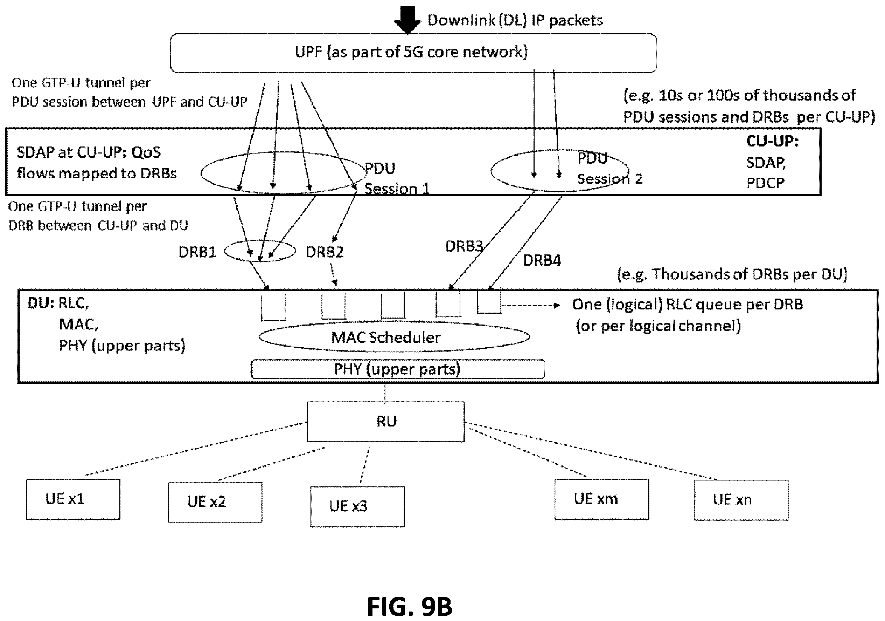

In 5G networks, PDU connectivity service is a service that provides exchange of PDUs between a UE and a data network identified by a Data Network Name (DNN). The PDU Connectivity service is supported via PDU sessions that are established upon reqauest from the UE. This DNN defines the interface to a specific external data network. One or more QoS flows can be supported in a PDU session. All the packets belonging to a specific QoS flow have the same 5QI (5G QoS Identifier). Figure 9A illustrates a PDU Session architecture consisting of multiple DRBs. Each DRB may consist of multiple QoS flows (3GPP TS 23.501). Figure 9B illustrates a CU and DU view on PDU session, DRBs and GTP-U tunnels for a 5G network architecture. Parts of a standard 5QI are shown in Table 1.

Table 1

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 1 | GBR | 20 | 100 ms (NOTE 11, NOTE 13) | $10^{-2}$ | N/A | 2000 ms | Conversational Voice |
| 2 | (NOTE 1) | 40 | 150 ms (NOTE 11, NOTE 13) | $10^{-3}$ | N/A | 2000 ms | Conversational Video (Live Streaming) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 3 | | 30 | 50 ms (NOTE 11, NOTE 13) | $10^{-3}$ | N/A | 2000 ms | Real Time Gaming, V2X messages (see TS 23.287 [121]). Electricity distribution - medium voltage, Process automation monitoring |
| 4 | | 50 | 300 ms (NOTE 11, NOTE 13) | $10^{-6}$ | NiA | 2000 ms | Non-Conversational Video (Buffered Streaming) |
| 65 (NOTE 9, NOTE 12) | | 7 | 75 ms (NOTE 7, NOTE 8) | $-10^{-2}$ | N/A | 2000 ms | Mission Critical user plane Push To Talk voice (e.g., MCPTT) |
| 66 (NOTE 12) | | 20 | 100 ms (NOTE 10, NOTE 13) | $10^{-2}$ | N/A | 2000 ms | Non-Mission-Critical user plane Push To Talk voice |
| 67 (NOTE 12) | | 15 | 100 ms (NOTE 10, NOTE 13) | $10^{-3}$ | N/A | 2000 ms | Mission Critical Video user plane |
| 75 (NOTE 14) | | | | | | | |
| 71 | | 56 | 150 ms (NOTE 1'1, NOTE 13, NOTE 15) | $10^{-6}$ | N/A | 2000 ms | "Live" Uplink Streaming (e g. TS 213,238 [76]) |
| 72 | | 56 | 300 ms (NOTE 11, NOTE 13, NOTE 15) | $10^{-4}$ | N/A | 2000 ms | "Live" Uplink Streaming (e.g. TS 26.238 [76]) |
| 73 | | 56 | 300 ms (NOTE 11, NOTE 13, NOTE 15) | $10^{-8}$ | N/A | 2000 ms | "Live" Uplink Streaming (e.g. TS 26.238 [76]) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 74 | | 56 | 500 ms (NOTE 11, NOTE 1 15) | $10^{-8}$ | N/A | 2000 ms | "Live" Uplink Streaming (e.g. TS 26.238 [76]) |
| 76 | | 56 | 500 ms (NOTE 11, NOTE 13, NOTE 15) | $10^{-4}$ | N/A | 2000 ms | "Live" Uplink Streaming (e g TS 26.238 [76]) |
| 5 | Non-GBR (NOTE 1) | 10 | 100 ms NOTE 10, NOTE 13) | $10^{-6}$ | N/A | N/A | IMS Signalling |
| 6 | | 60 | 300 ms (NOTE 10, NOTE 13) | $10^{-6}$ | N/A | N/A | Video (Buffered Streaming) TCP-based (e.g., www, e-mail, chat, ftp, p2p file sharing, progressive video, etc.) |
| 7 | | 70 | 100 ms (NOTE 10, NOTE 13) | $10^{-3}$ | N/A | N/A | Voice, Video (Live Streaming) interactive Gaming |

As shown in Figures 9A-9B, a PDU session comprises the following:

A Data Radio Bearer (DRB) is between UE and CU in RAN and a NG-U GTP tunnel which is between CU and UPF (User Plane Function) in the core network. For the 3GPP's 5G network architecture, the transport connection between the base station (i.e., CU-UP) and User Plane Function (UPF) uses a single GTP-U tunnel per PDU session. The PDU session is identified using GTP-U TEID (Tunnel Endpoint Identifier). The transport connection between DU and CU-UP uses a single GTP-U tunnel per DRB.

SDAP

The SDAP (Service Adaptation Protocol) Layer receives downlink data from the UPF across the NG-U interface. It maps one or more QoS Flow(s) onto a specific DRB. The SDAP header is present between the UE and the CU (when reflective QoS is enabled), and includes a field to identify the QoS flow within a specific PDU session. GTP-U user plane protocol includes a field to identify the QoS flow and is present between CU and UPF (in the core network).

Flow Control between CU-UP and DU

Procedures and functionality of the F1-U interface are defined in 3GPP TS 38.425. This F1-U interface supports NR User Plane (NR-U) protocol which provides support for flow control and reliability between CU-UP and DU for each DRB. Figure 9B shows DL Data, and Flow Control Feedback (DDDS) in 5G Networks. Downlink User Data (DUD) PDUs are used to carry PDCP PDUs from CU-UP to DU for each DRB. The Downlink Data Delivery Status (DDDS) message conveys Desired Buffer Size (DBS), Desired Data Rate (DDR) and some other parameters from DU to CU-UP for each DRB as part of flow control feedback.

If value of the DBS is zero for a DRB, the NR PDCP hosting node (i.e., the CU-UP here) stops sending data for that DRB from the CU-UP 151b to the DU 152. If value of the DBS is greater than zero, the NR PDCP hosting node (i.e., CU-UP 151b) can send up to this amount of data for that DRB. The value of DDR is the amount of data desired to be received every second by the DU (from CU-UP) for that DRB. The corresponding node (i.e., DU) can also transfer uplink data from the DU to the CU-UP for the concerned DRB along with the DDDS frame in the same GTP-U tunnel. Transfer of (Radio) Assistance Information (TAI) PDU from DU to CU-UP is also supported.

*5G network architecture*

Radio Resource Management

L2 methods (such as MAC scheduler) play a critical role in allocating radio resources to different UEs in a cellular network. The scheduling priority of a UE ($P_{UE}$) is determined as part of MAC scheduler as follows:

$$P_{UE} = W_{5QI}*P_{5QI} + W_{GBR}*P_{GBR} + W_{PDB}*P_{PDB}^{DU} + W_{PF}*P_{PF},$$

where

- $P_{5QI}$ is the priority metric corresponding to the QoS class (5QI) of the logical channel. Incoming traffic from a DRB is mapped to Logical Channel (LC) at RLC level. $P_{5QI}$ is the default 5QI priority value, $Priority_{5QI}$, of a QoS flow that is mapped to the current LC. The lower the value of $Priority_{5QI}$ the higher the priority of the corresponding QoS flow. For example, VoNR (with 5QI 1) will have (much) higher $P_{5QI}$ compared to web browsing (with 5QI 9).

- $W_{5QI}$ is the weight of $P_{5QI}$

- $P_{GBR}$ is the priority metric corresponding to the target bit rate. The GBR metric $P_{GBR}$ represents the fraction of data that must be delivered to the UE within the time left in the current averaging window $T_{avg\_win}$ (as per 5QI table, default is 2000msec.) in order to meet the UE's GBR requirement and is calculated as follows: $P_{GBR}$ = remData/targetData where

  • targetData is the total data bits to be served in each averaging window $T_{avg\_win}$ in order to meet the GFBR of the given QoS flow

  • remData is the amount of data bits remaining to be served within the time left in the current averaging window

  • $Priority_{GBR}$ is reset to 1 at the start of each averaging window $T_{avg\_win}$, and should go down to 0 towards the end of this window if the GBR criterion is met

  • $Priority_{GBR}$ = 0 for non-GBR flows

- $W_{GBR}$ is the weight of $P_{GBR}$

- $P_{PDB}^{DU}$ is the priority metric corresponding to the packet delay budget at DU. $P_{PDB}^{DU} = 1$ if $PDB^{DU} <= QDelay_{RLC}$ and $P_{PDB}^{DU} = 1/(P_{PDB}^{DU} - QDelay_{RLC})$ ; if $PDB^{DU} > QDelay_{RLC}$ where both $PDB^{DU}$ (Packet Delay Budget at DU) and RLC Queuing delay are measured in terms of slots.

  • $QDelay_{RLC} = (t - T_{RLC})$ is the delay of the oldest RLC packet in the QoS flow that has not been scheduled yet and is calculated as the difference in time between the SDU insertion in RLC queue to current time where t := current time instant, $T_{RLC}$ := time instant when oldest SDU was inserted in RLC.

- $W_{PDB}$ is the weight of $P_{PDB}$

- $P_{PF}$ is the priority metric corresponding to proportional fair metric. $P_{PF}$ is the classical PF Metric, calculated on a per UE basis as $P_{PF} = r / R_{avg}$

  • r: UE spectral efficiency calculated based on one RB & it's last reported CQI.

- $R_{avg} = a.R_{avg} + (1-a).b$ , UE's average throughput, where b>=0 is #bits scheduled in current TTI and 0 < a <= 1 is the IIR filter coefficient

- $W_{PF}$ is the weight of $P_{PF}$

In another variant, the scheduling priority of a UE is determined as follows:

$$P_{UE} = (W_{5QI}{*}P_{5QI} + W_{PF}{*}P_{PF}) * \text{maximum} (W_{GBR}{*}P_{GBR}, W_{PDB}{*}P_{PDB}^{DU}).$$

The scheduling priority of a UE is based on the maximum logical channel priority value across the LCs of the UE and the resources allocated to a UE are based on this maximum logical channel priority.

Described herein are various methods and architectures for computing scheduling priority of a UE, including those described above.

As noted herein, O-RAN, which is based on disaggregated components and connected through open and standardized interfaces is based on 3GPP LTE and NR RAN. An overview of O-RAN showing disaggregated RAN (CU, DU, and RU], near-real-time RIC and non-real-time RIC is shown in Figures 8A-8B.

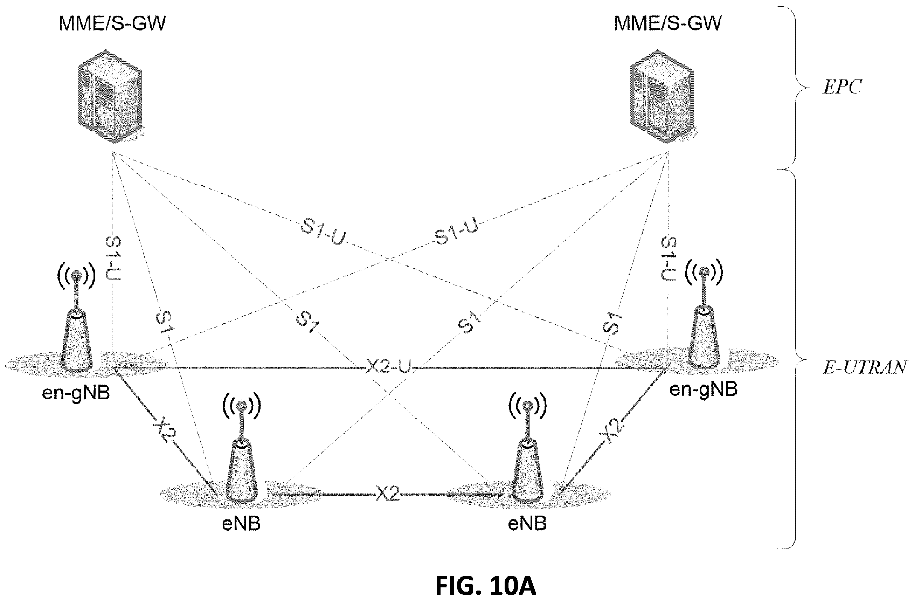

An E-UTRAN architecture is illustrated in Figure 10A. The E-UTRAN comprises of eNBs, providing the E-UTRA U-plane (PDCP/RLC/MAC/PHY) and control plane (RRC) protocol terminations towards the UE. The eNBs are interconnected with each other by means of the X2 interface. The eNBs are also connected by means of the S1 interface to the EPC (Evolved Packet Core), more specifically to the MME (Mobility Management Entity) by means of the S1-MME interface and to the Serving Gateway (S-GW) by means of the S1-U interface. The S1 interface supports a many-to-many relation between MMEs / Serving Gateways and eNBs.

E-UTRAN also supports MR-DC via E-UTRA-NR Dual Connectivity (EN-DC), in which a UE is connected to one eNB that acts as a MN and one en-gNB 106 that acts as a SN. The eNB is connected to the EPC 140 via the S1 interface and to the en-gNB 106 via the X2 interface. The en-gNB 106 might also be connected to the EPC 140 via the S1-U interface and other en-gNBs 106 via the X2-U interface. In EN-DC, and en-gNB 106 comprises gNB-CU 151and gNB-DU(s) 152.

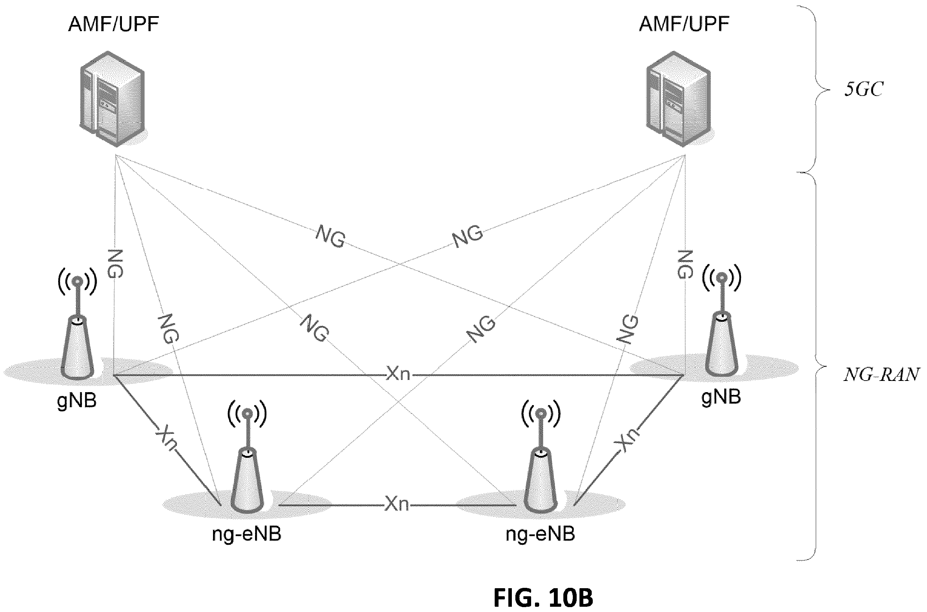

As shown in Figure 10B, in the NG-RAN architecture, NG-RAN node is either:

a gNB, providing NR user plane and control plane protocol terminations towards the UE; or

an ng-eNB, providing E-UTRA user plane and control plane protocol terminations towards the UE. (3GPP TS 38.300 17.3.0.)

As shown in Figure 10B, the gNBs 106 and ng-eNBs are interconnected with each other by means of the Xn interface. The gNBs 106 and ng-eNBs are also connected by means of the NG interfaces to the 5GC, more specifically to the AMF (Access and Mobility Management Function) by means of the NG-C interface and to the UPF (User Plane Function) by means of the NG-U interface.

The gNB 106 and ng-eNB host functions for Radio Resource Management such as: Radio Bearer Control, Radio Admission Control, Connection Mobility Control, Dynamic allocation of resources to UEs in both uplink and downlink (scheduling), connection setup and release; session Management; QoS Flow management and mapping to data radio bearers; Dual Connectivity.

In an example, control information (e.g., scheduling information) may be provided for broadcast and/or multicast operation. The UE may monitor different bundle sizes for the control channel depending on the maximum number of repetitions.

*Description of Implementations*

Implementations described herein provide a number of technical solutions for reducing interference effects in the absence of inter-cell coordination between gNBs over Xn interface. These include systems and methods for randomizing RB allocation (referred to as RB allocation policies) to reduce interference effects in the absence of inter-cell coordination between gNBs over Xn interface. Also described are systems and methods for determining the appropriate RB allocation policy based on the state of the cell. The state of the cell captures the cell load and radio (such as channel reception) conditions of the UEs based on multiple parameters.

The E2 nodes (CU and DU) are connected to the near-real-time RIC using the E2 interface. The E2 interface is used to send data (e.g., user, cell, slice KPMs) from the RAN, and deploy control actions and policies to the RAN. The application or service at the near-real-time RIC that deploys the control actions and policies to the RAN are call xApps. The near-real-time RIC is connected to the non-real-time RIC using the A1 interface. The E2 nodes, CU and DU are connected using the F1 interface. The DU is connected is also connected to RU through the FH interface.

In implementations, the present disclosure provides a system and methods for reducing interference effects in the absence of inter-cell coordination between gNBs over Xn interface. As noted above, the different aspects of the implementations are as follows.

(1) Systems and methods for randomizing RB allocation (referred to as RB allocation policies) to reduce interference effects in the absence of inter-cell coordination between gNBs over Xn interface.

(2) A system and method for determining an appropriate RB allocation policy based on the state of the cell. The state of the cell captures the cell load and radio conditions of the UEs based on multiple parameters.

*Data/Parameters forwarded over E2 interface (from RAN to RIC).*

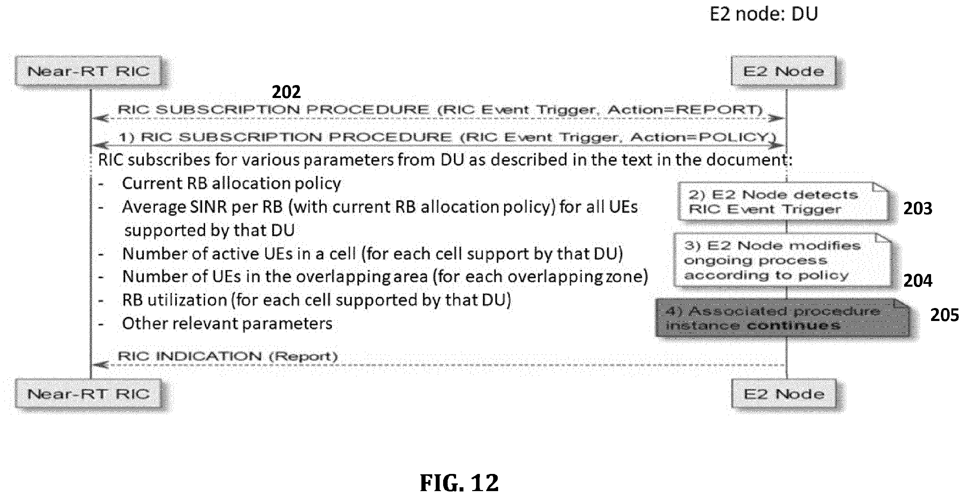

Figure 12 illustrates a flow for near-RT-RIC subscribing to some parameters from the DU. At block 202, near-RT-RIC sends a RIC Event Trigger for an RIC subscription procedure. At block 203, the E2 Node DU detects the RIC Event Trigger and the data/parameters are sent to the near-real-time RIC from the RAN over the E2 interface to determine the appropriate RB allocation policy. These parameters are forwarded from the RAN to the near-real-time RIC every $T_{params}$ time-interval. Different reporting time intervals for different parameters can be implemented as well. At block 204, the E2 DU node modifies its RB allocation according to the RB policy sent from the RT-RIC. At block 205 the associated procedure (i.e. radio resource management which takes into account randomization as informed by near-RT-RIC) continues at the E2 node DU.

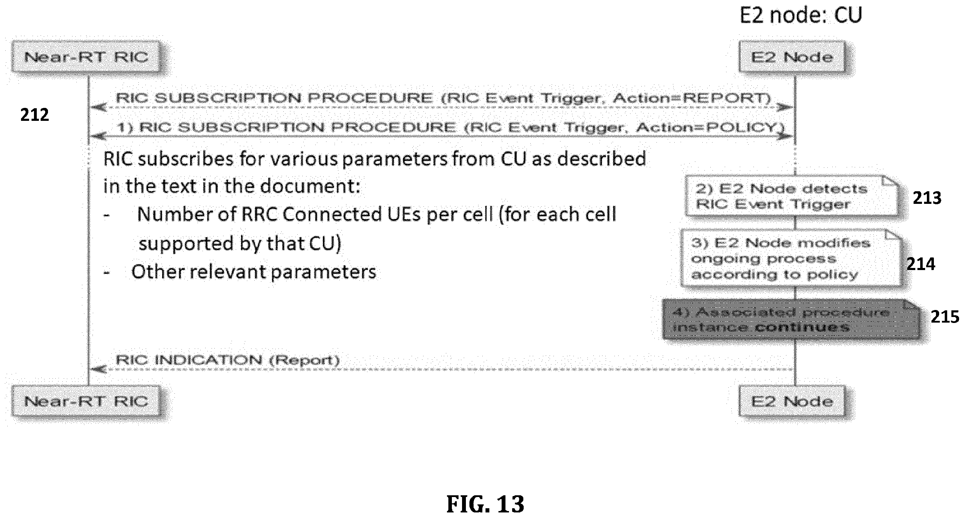

Figure 13 illustrates a flow for near-RT-RIC subscribing to some parameters from the CU. At block 212, near-RT-RIC sends a RIC Event Trigger for an RIC subscription procedure to the E2 Node CU. At block 213, the E2 Node CU detects the RIC Event Trigger and the data/parameters are sent to the near-real-time RIC from the RAN over the E2 interface to determine the appropriate RB allocation policy. The parameters are forwarded from the RAN to the near-real-time RIC at $T_{params}$ time-interval. Different time-intervals for different parameters can be implemented as well. At block 214, the E2 CU node applies policies received from near-RT-RIC if any.. At block 215 the associated procedure continues at the E2 node CU..

The data/parameters include:

(1) Current RB allocation policy used (curRBAllocPolicy). The current RB allocation policy can be any one of the multiple different RB allocation policies that are available for deployment at the DU. In order to determine the efficiency of the current RB allocation policy, other parameters are used.

(2) Avg. SINR per RB based on the current RB allocation policy used (avgSinrPerRB). This is the average SINR per RB calculated at the RAN when the current RB allocation policy is used. The range of avgSinrPerRB is [minSinrPerRB, maxSinrPerRB].

(3) Number of connected UEs in a cell (numConnUEs). This is the number of RRC connected UEs in a cell. The range of numConnUEs is [minNumConnUEs, maxNumConnUEs].

(4) Number of active UEs in a cell (numActiveUEs). This is the number of RRC connected UEs which have at least one LC/LCG whose Buffer Occupancy (BO) is non-zero. The range of numActiveUEs is [minNumActiveUEs, maxNumActiveUEs]. Also, maxNumActiveUEs = maxNumConnUEs. Alternatively, maxNumActiveUEs could be $\mu$ * maxNumConnUEs where $\mu$ is less than or equal to 1 and could depend on the hardware and software capabilities of the base station.

(5) Number of UEs in the overlapping area (numOverlapUEs). This is the number of UEs in the overlapping area with other cells. UEs that are in the overlapping area can be determined from the location of gNBs, location of UEs, and cell radius. The range of numOverlapUEs is [minNumOverlapUEs, maxNumOverlapUEs]. Also, maxNumOverlapUEs = maxNumConnUEs.

(6) RB utilization (rbUtilize). This is the average percentage of RB utilized in a slot. The range of rbUtilize is [0,100].

*Determination of cell state (cellState)*

A cell state metric is defined ( cellState) which captures the state of a cell. The state of a cell (cellState) incorporates the cell load as well as the radio conditions of the UEs. Depending on the cell load and radio conditions of the UEs, there can be multiple cell states, i.e., cell state could take different values . Some of the cell states can favor deploying a randomized RB allocation policy, while for other states, deploying randomized RB allocation policy may not be useful. The mapping of the different cell states and RB allocation policies is as described herein.

Based on the parameters received from the RAN, the cell state (cellState) metric can be determined as follows. The range of cellState is [0,1].

$$cellState = \frac{\left(\frac{numOverlapUEsNorm}{sinrPerRBNorm}\right)}{(\alpha.\ numConnUEsNorm + \beta.\ numActiveUEsNorm + \gamma.\ rbUtilizeNorm)}$$

where

$$numOverlapUEsNorm = \frac{(numOverlapUEs - minNumOverlapUEs)}{(maxNumOverlapUEs - minNumOverlapUEs)} \in [0,1]$$

$$numConnUEsNorm = \frac{(numConnUEs - minNumConnUEsNorm)}{(maxNumConnUEsNorm - minNumConnUEsNorm)} \in [0,1]$$

$$numActiveUEsNorm = \frac{(numActiveUEs - minNumActiveUEs)}{(maxNumActiveUEs - minNumActiveUEs)} \in [0,1]$$

$$sinrPerRBNorm = \frac{(sinrPerRB - minSinrPerRB)}{(maxSinrPerRB - minSinrPerRB)} \in [0,1]$$

$$rbUtilizeNorm = \frac{rbUtilize}{100} \in [0,1]$$

$$\alpha + \beta + \gamma = 1.0$$

*Mapping of cell state (cellState) to RB allocation policy*

As will be appreciated, the higher the degree of randomization in RB allocation policy, the more computationally expensive it is at the RAN/scheduler. Therefore, a randomized RB allocation policy can be configured to be employed only when the cell state (i.e., cell load and UEs radio condition) is clearly favorable.

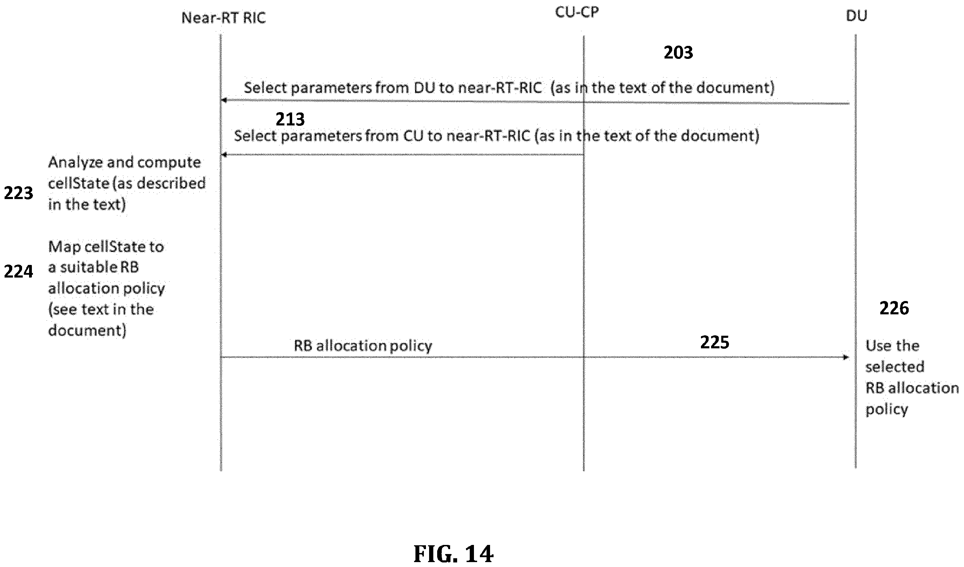

Figure 14 shows an exemplary flow for the selection of a suitable RB allocation policy (in semi-static / dynamic way). At block 223, the Near-RT RIC analyzes and computes the cell state as described herein. At block 224 the Near-RT RIC maps a selected RB allocation policy, and at block 225, sends the selected RB allocation policy to the E2 node. At block 226, the E2 node DU applies the selected RB allocation policy.

In an implementation, described are three RB allocation policies: Policy 1, Policy 2 and Policy 3. Policy 1 has a higher degree of randomization than Policy 2. Policy 3 does not use randomization. The number of policies is exemplary. An operator can, for example, choose to use higher number of randomization policies (such as five policies).

The higher the value of the cellState described above, the more favorable it is to employ a higher degree of randomization in the RB allocation policy. The cell state metric (cellState) is used to identify the state of the cell, and then an appropriate RB allocation policy is selected as shown below in Table 2 (for the case where three policies are used). The details of the construction and usage of Table 2 are shown below.

*Table 2 construction*

Based on the range of values (denoted as High/Mid/Small) of the different parameters shown in Column #3 ($\alpha$. numConnUEs + $\beta$ . numActiveUEs + $\gamma$ , rbUtilize), Column #4 (numOverlapUEs), and Column #5 (avgSinrPerRB), a possible range of values (High/Mid/Small) is determined for a cellState as shown in Column #2. Actual ranges of values are then assigned to High, Mid, and Small for cellState as shown in Column #1.

Table 2

| Column #1 | Column #2 | Column #3 | Column #4 | Column #5 | Column #6 | Column #7 |
|---|---|---|---|---|---|---|
| Cell State (High/Mid/ Small ) | Cell State (cellStat e) | ($\alpha$ . numConnUE s + $\beta$ . numActiveU Es + $\gamma$ . rbUtilize) (captures cell load] | numOverla pUEs (No. of UEs in overlappin g area of the cell) | avgSinrPer RB (Average interferenc e experience d by UEs in the cell) | Strategy for RB allocation | RB allocation policy |
| Small | [0-0.33] | High | Small/Mid/ High | Small/Mid/ High | No randomizatio n because it is fully loaded | Policy 3 |
| Mid | [0.34-0.66] | Mid | Small/Mid (cannot be High) | High | Moderatelyra ndomized | Policy 2 |
| High | [0.67-1] | Mid | Small/Mid (cannot be High) | Small/Mid | Highly randomized | Policy 1 |
| Mid | [0.34-0.66] | Small | Small (cannot be Mid/High) | High | Moderatelyra ndomized | Policy 2 |
| High | [0.34-0.66] | Small | Small (cannot be Mid/High) | Small/Mid | Highly randomized | Policy 1 |

In Table 2, the following mapping is used for cellState.

Low -> [0-0.33]

Mid -> [0.34-0.66]

High-> High [0.67-1]

As will be appreciated, the mapping ranges above are an approximation. Other mappings can be used. Also, Artificial Intelligence or machine learning based techniques can be used to derive the mapping.

*Table 2 Usage*

When the parameters are received at the near-real-time RIC over the E2 interface, a value of cellState is calculated. The calculated value of the cellState is then used to obtain the appropriate RB allocation policy based on the mapping of Column #1 and Column #7.

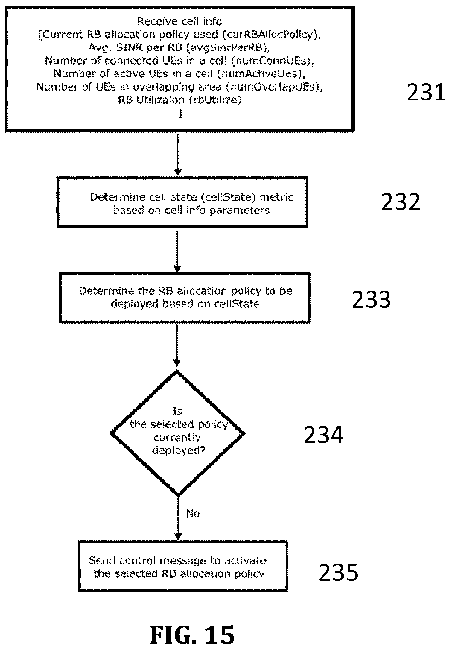

A high-level flow of control and data is shown in Figure 15.

At block 231, the RIC receives the cell information including the data and parameters forwarded over E2 interface from the RAN to the RIC, discussed above. At block 232, the RIC determines the cell state (cellState) metric based on the cell information parameters as discussed above. At block 233, the RIC determines the RB policy to be deployed based on the cellState as discussed above. At block 234, the RIC then determines if the RB Policy identified in block 233 is currently being deployed. If not, at block 235 the RIC sends a control message to activate the selected policy.

*RB allocation Policy 1*

In an implementation, the scheduler can be configured to employ RB allocation Policy 1 at the RAN after determining the number of RBs required in the slot across all the UEs to be scheduled. RB and PRB are used interchangeably while describing the policy.

In the implementation of Policy 1, the scheduler:

  a. chooses the starting PRB randomly from [PRB_min, ......, PRB_max] with uniform distribution,

  b. continuously allocates PRBs around the starting PRB by selecting PRB(s) from the left (L) or right (R), and

  c. randomly until the total required PRBs across all the UEs can be allocated.

A description of an RB allocation Policy 1 method is shown below. This method is configured to return the range of PRBs, [L, R] where the required PRBs across all the UEs can be allocated.

1. [PRB_min, PRB_max] is the range of resources available //e.g., PRB_min=0, PRB_max=9

  avail_PRB: number of available resources for allocation //e.g., avail_PRB = 10 [0-9]

  total_req_PRB: total req. PRBs across all the UEs

  remain_req_PRB = total_req_PRB

  alpha: max. number of RBs to be allocated at every step

2. Pick start_PRB from [PRB_min, ...., PRB_max] with uniform distribution. //e.g., PRB_min=0, PRB_max=9

3. If start_PRB != PRB_min (i.e. if start_PRB is not equal to PRB_min) and start_PRB != PRB_max (i.e. if start_PRB is not equal to PRB_max)

L = start_PRB – 1, Lsize = start_PRB //Lsize is available PRBs on the left side of start_PRB

R = start_PRB + 1, Rsize = PRB_max – start_PRB // Rsize is available PRBs on the right side of start_PRB

  else if start_PRB == PRB_max

L = start_PRB – 1, Lsize = PRB_max, R = -1, Rsize = 0

  else if start_PRB == PRB_min

L = -1, Lsize = 0, R = start_PRB + 1, Rsize= PRB_max

remain_req_PRB = remain_req_PRB -1

. While remain_req_PRB > 0

  if Lsize > 0 and Rsize > 0

    Pick one from {L, R} with uniform distribution

    Case L:

      delta  = min (alpha, Lsize, remain_req_PRB )

      L = L – delta

      Lsize = Lsize – delta

      If L < 0, then L = -1

    Case R:

      delta  = min (alpha, Rsize, remain_req_PRB )

      R = R + delta

      Rsize = Rsize – delta

      If R > PRB_max, then R = -1

  remain_req_PRB = remain_req_PRB - delta

  else if Lsize == 0

    R = R + remain_req_PRB

    remain_req_PRB = 0

    if R > PRB_max, then R = -1

      break

  else if Rsize == 0

    L = L – remain_req_PRB

    remain_req_PRB = 0

If L < 0, then L = -1

break

5. If L == -1, then L = 0

else, L = L + 1

If R == -1 , then R = PRB_max

else, R = R+1

Return L and R// [L, R] is the range of resources that will be allocated.

Example 1:

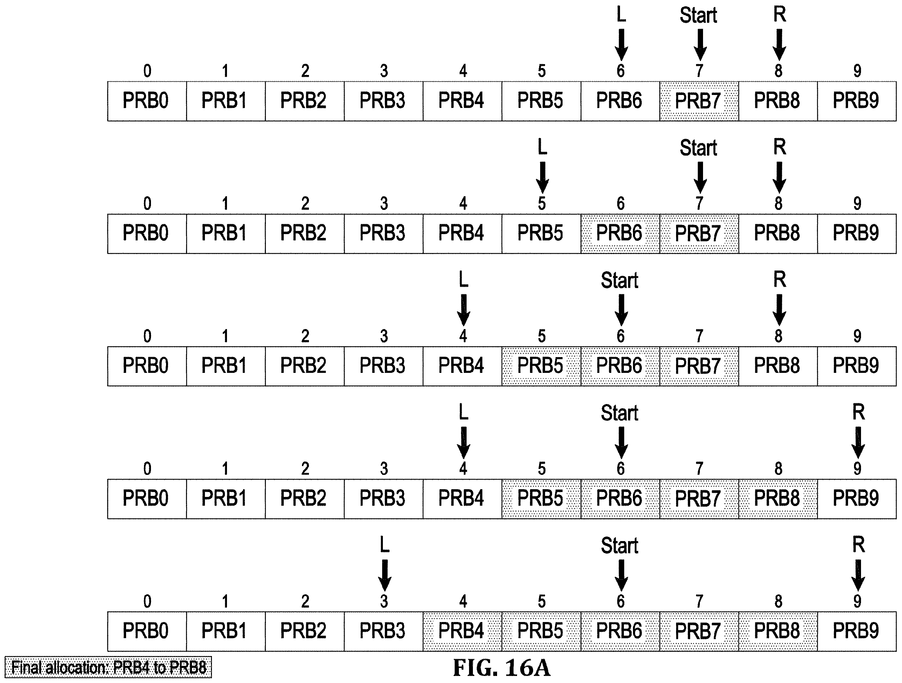

Figure 16A shows a first example of RB allocation Policy 1. As shown in Figure 16A:

3 UEs: UE1 required = 2 RBs, UE2 required = 2 RBs, UE3 required = 1 RB
Total = 5 RBs
Start = 7 (Pick randomly from [0,1,2,..,8,9])
Picked up random sequence: L, L, R, L
alpha (rate) = 1

As shown in FIG 16A, the final allocation is from PRB4 to PRB8.

Example 2:

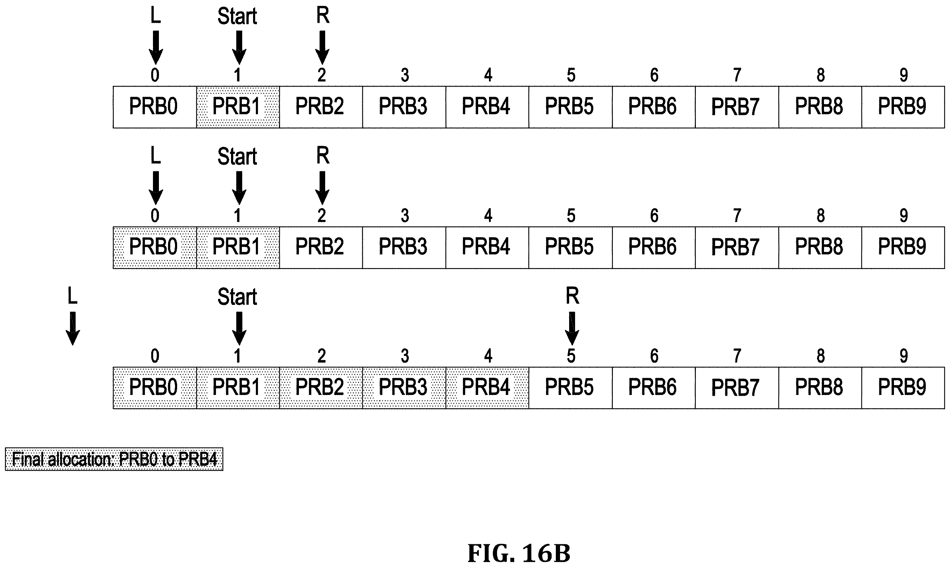

Figure 16B shows a second example of RB allocation policy 1. As shown in Figure 16B:

3 UEs: UE1 required = 2 RBs, UE2 required = 2 RBs, UE3 required = 1 RB
Total = 5 RBs
Start = 1 (Pick randomly from [0,1,2,..,8,9])
Random sequence: L, R
alpha (rate) = 1

As shown in Figure 16B, the final allocation is from PRB0 to PRB4.

Example 3:

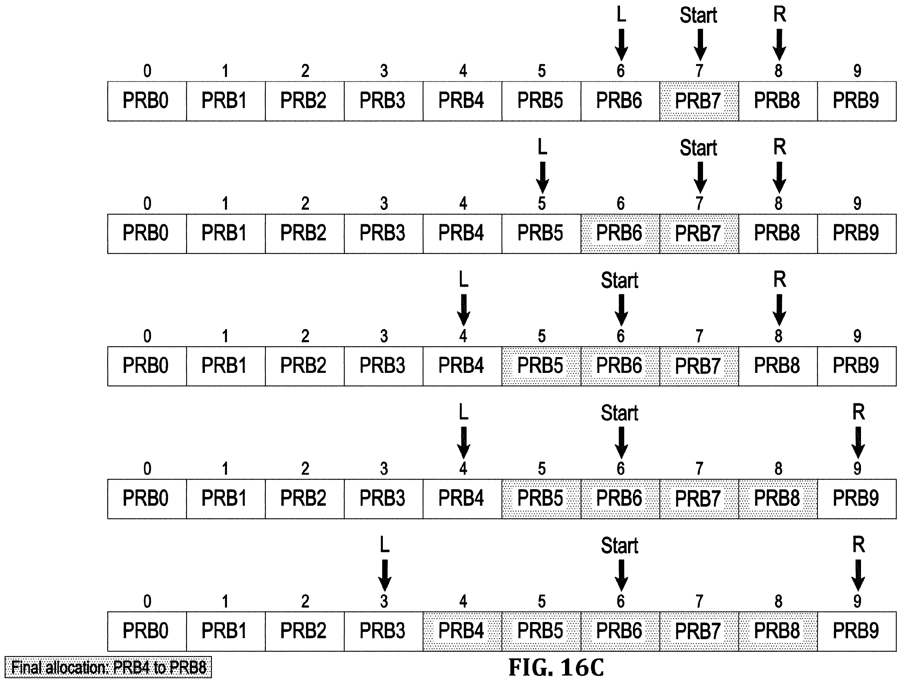

Figure 16C shows a third example of RB allocation Policy 1. As shown in Figure 16C:

3 UEs: UE1 required = 3 RBs, UE2 required = 2 RBs, UE3 required = 1 RB

Total = 6 RBs

Start = 1 (Pick randomly from [0,1,2,..,8,9])

Random sequence: R, L, R

alpha (rate) = 2

As shown in Figure 16C, the final allocation is from PRB0 to PRB5.

*RB allocation Policy 2*

An overview of RB allocation Policy 2 is as follows.

(1) Choose the starting PRB for each selected UE between two available starting points (PRBs) and (2) randomly allocating the PRBs from either side of the two chosen starting PRBs; and (3) continuously randomly allocating the PRBs the sides of the two starting PRBs if there are more PRBs and UEs.

A more detailed description of RB allocation Policy 2 is shown below. RB and PRB are used interchangeably while describing the policy.

(1) [PRB_min, PRB_max] is the range of resources available

avail_PRB: number of available resources for allocation

PRB left, PRB_right: these are indexes, that hold the PRB number(reference)

(2) Initially PRB left = PRB_min (e.g. 0), PRB_right = PRB_max (e.g. 9], avail_PRB = 10

(3) While there are UEs to be scheduled and available PRBs

(a) Let req_PRB is the required number of PRBs of the UE.
//can allocate only what is available

(b) assign_PRB = min(req_PRB, avail_PRB)

(c) Select randomly Start_PRB = {PRB_left, PRB_right} with uniform distribution

(d) If Start_PRB = PRB left

(a) Start from PRB[PRB_left]
(b) Allocate assign_PRB from PRB Jeft (allocate from left to right)
(c) PRB left = PRB left + assign_PRB
(d) avail_PRB = avail_PRB - assign_PRB

(e) Else if Start_PRB = PRB_right

(a) Start from PRB[PRB_right]
(b) Allocate assign_PRB from PRB_right (allocate from right to left)
(c) PRB_right = PRB_right - assign_PRB
(d) avail_PRB = avail_PRB - assign_PRB

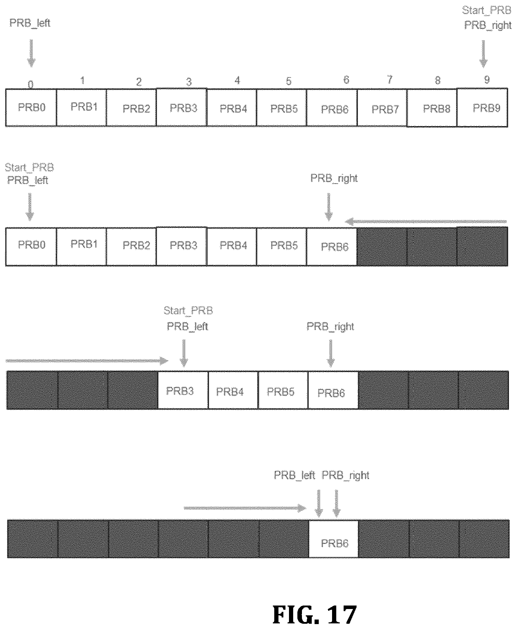

An example that illustrates the working of RB allocation Policy 2 is shown below and in Figure 17. The example shows the number of available PRBs, avail_PRB = 10, the number of required PRBs by the first UE selected, req_PRB = 3. Then, assign_PRB = min(3,10) = 3, and start_PRB = PRB_right. Also, the number of required PRBs by the second and third selected UEs are both 3. The allocation can continue if there are more PRBs and UEs. Initially, PRB left = 0, PRB_right = 9. The sequence of random output at step (c) is: PRB_right, PRB_left, PRB left.

*RB allocation Policy 3*

As noted above, Policy 3 is not random and starts RB allocation from the beginning of the spectrum(or available bandwidth) as it is fully loaded.

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the invention.

**Claims**

1. A method for reducing interference effects in the absence of inter-cell coordination between gNBs over Xn interface comprising:
   determining an appropriate RB allocation policy of from a plurality of RB allocation policies based on a cell state (cellState) based on a plurality of parameters, wherein the state of the cell includes a cell load and radio conditions for a plurality UEs, and the plurality of RB allocation policies include at least one random RB allocation policy.

2. The method of claim 1, further comprising:
   subscribing, by a near-RT-RIC, to receive a number of the plurality of the parameters from a E2 Node, the E2 Node being a DU or a CU.

3. The method of claims 1 or 2, **characterized in that** the method further comprises:

   sending, by the near RT-RIC, an RIC event trigger for an RIC subscription procedure;
   sending, in response to the RIC event trigger, the number of the plurality of the parameters from the E2 Node over an E2 interface to determine appropriate RB allocation policy.

4. The method according to any one of the above claims, **characterized in that** the method further comprises:
   implementing different intervals for different parameters of the plurality of parameters.

5. The method according to any one of the above claims, wherein the plurality of parameters comprise:

   a Current RB allocation policy used (curRBAllocPolicy) including any one of the plurality RB allocation policies that are available for deployment at the DU;
   an Average SINR per RB based on the Current RB allocation policy (avgSinrPerRB), the average SINR per RB being calculated at the RAN when the current RB allocation policy is used, wherein the avgSinrPerRB preferably includes a range having a minimum (minSinrPerRB) and a maximum (maxSinrPerRB);
   a Number of connected UEs in a cell (numConnUEs), wherein the numConnUEs preferably includes a range having a minimum (minNumConnUEs) and a maximum (maxNumConnUEs);
   a Number of active UEs in a cell (numActiveUEs), the numActiveUEs being the number of RRC connected UEs which have at least one LC/LCG whose Buffer Occupancy (BO) is non-zero, wherein the numActiveUEs preferably includes a range having minimum minNumActiveUEs and a maximum maxNumActiveUEs, and wherein the maximum maxNumActiveUE equals the maxNumConnUEs (maxNumActiveUEs = maxNumConnUEs);
   Number of UEs in an overlapping area (numOverlapUEs) with other cells, wherein the determining of the UEs that are in the overlapping cells preferably includes determining a location of gNBs, a location of the UEs, and a cell radius, wherein the numOverlapUEs preferably includes a range having minimum minNumOverlapUEs and a maximum maxNumOverlapUEs, and wherein the maximum maxNumOverlapUEs equals the = maxNumConnUEs (maxNumOverlapUEs = maxNumConnUEs); and
   a RB utilization (rbUtilize), the rbUtilize being an average percentage of RB utilized in a slot, wherein the rbUtilize preferably includes a range of 0-100 (0,100].

6. The method according to claim 5, wherein the range of the cell state is [0, 1], and the cell state (cellState) metric is calculated from the parameters as:

$$\text{cellState} = \frac{\left(\frac{\text{numOverlapUEsNorm}}{\text{sinrPerRBNorm}}\right)}{(\alpha \cdot \text{numConnUEsNorm} + \beta \cdot \text{numActiveUEsNorm} + \gamma \cdot \text{rbUtilizeNorm})}$$

where

$$numOverlapUEsNorm = \frac{(numOverlapUEs - minNumOverlapUEs)}{(maxNumOverlapUEs - minNumOverlapUEs)} \in [0,1]$$

$$numConnUEsNorm = \frac{(numConnUEs - minNumConnUEsNorm)}{(maxNumConnUEsNorm - minNumConnUEsNorm)} \in [0,1]$$

$$numActiveUEsNorm = \frac{(numActiveUEs - minNumActiveUEs)}{(maxNumActiveUEs - minNumActiveUEs)} \in [0,1]$$

$$sinrPerRBNorm = \frac{(sinrPerRB - minSinrPerRB)}{(maxSinrPerRB - minSinrPerRB)} \in [0,1]$$

$$rbUtilizeNorm = \frac{rbUtilize}{100} \in [0,1]$$

$$\alpha + \beta + \gamma = 1.0$$

7. The method according to any one of the above claims, wherein the randomized RB allocation is deployed based on the cell state (cellState), and wherein the higher a value of the cellState, the more favorable it is to employ a higher degree of randomization in the RB allocation policy.

8. The method according to any one of the above claims, wherein a mapping of cell state values for the randomized RB allocation based on the cell state includes a Low range, a Mid range, and a High range, wherein the mapping preferably includes: Low -> [0-0.33], Mid -> [0.34-0.66], and High-> High [0.67-1].

9. The method according to any one of the above claims, wherein the method further comprises:

when the parameters are received at the near-real-time RIC over the E2 interface, calulating the value of cellState; and
mapping, by the near-RT RIC, the appropriate RB allocation policy based on the calculated value of the cellState.

10. The method according to any one of the above claims, wherein a mapping of cell state values for the randomized RB allocation based on the cell state comprises:

randomly choosing a starting PRB from a range of PRBs having a uniform distribution and a PRB minimum and a PRB maximum;
continuously allocating the PRBs around the starting PRB;
preferably by selecting PRB(s) from the left (L) or right (R) of the starting PRB; and
randomly selecting the PRBs from the range of PRBs until a total required number of PRBs across all the UEs can be allocated.

11. The method according to any one of the above claims, wherein a mapping of cell state values for the randomized RB allocation based on the cell state comprises:

choosing, for each of a plurality of selected UEs a starting PRB between two available starting points for the PRBs;
allocating the PRBs on either side of the chosen starting PRBs; and
continuously allocating the PRBs around the starting PRBs if there are more PRBs and UEs.

12. The method according to any one of the above claims, wherein a mapping of cell state values for the RB allocation based on the cell state is not random, and comprises:
choosing a starting PRB from the beginning of an available bandwidth for the PRBs.

**13.** The method according to any one of the above claims, wherein the method comprises:

determining, by the near-RT RIC if the selected RB Policy currently being deployed, and if not, sending a control message to activate the selected RB policy..

NR UE (101)

Circuitry (102)

Uu Interface (120)

NR gNB (106)

Circuitry (107)

Programmable Circuit
(102A)

Processor (103)

Memory (104)

Module (105)

Programmable Circuit
(107A)

Processor (108)

Memory (109)

Module (110)

Storage Device
(130)

**FIG. 1**

EP 4 460 065 A1

**FIG. 2**

EP 4 460 065 A1

**FIG. 3**

EP 4 460 065 A1

**FIG. 4A**

EP 4 460 065 A1

**FIG. 4B**

**FIG. 5**

**FIG. 6**

**FIG. 7**

SDAP

PDCP

RLC

MAC

IP Packet

n

SDAP SDU

PDCP SDU

RLC SDU

MAC SDU

IP Packet

n+1

SDAP SDU

PDCP SDU

RLC SDU

MAC SDU

IP Packet

m

SDAP SDU

PDCP SDU

SDU Segment

SDU Segment

MAC SDU

$RB_x$

$RB_y$

MAC PDU – Transport Block

**FIG. 8A**

**FIG. 8B**

O-RAN OAM Architecture

FIG. 9A

FIG. 9B

EP 4 460 065 A1

EP 4 460 065 A1

**FIG. 10A**

**FIG. 10B**

EP 4 460 065 A1

**FIG. 11**

E2 node: DU

FIG. 12

E2 node: CU

| Near-RT RIC | | | E2 Node |
|---|---|---|---|

212

RIC SUBSCRIPTION PROCEDURE (RIC Event Trigger, Action=REPORT)

1) RIC SUBSCRIPTION PROCEDURE (RIC Event Trigger, Action=POLICY)

RIC subscribes for various parameters from CU as described
in the text in the document:
- Number of RRC Connected UEs per cell (for each cell
  supported by that CU)
- Other relevant parameters

2) E2 Node detects
RIC Event Trigger                213

3) E2 Node modifies
ongoing process              214
according to policy

4) Associated procedure          215
instance continues

RIC INDICATION (Report)

| Near-RT RIC | | | E2 Node |
|---|---|---|---|

**FIG. 13**

EP 4 460 065 A1

**FIG. 14**

```
┌─────────────────────────────────────────────┐
│            Receive cell info                   │
│ [Current RB allocation policy used (curRBAllocPolicy), │
│        Avg. SINR per RB (avgSinrPerRB),        │      231
│ Number of connected UEs in a cell (numConnUEs), │
│  Number of active UEs in a cell (numActiveUEs), │
│ Number of UEs in overlapping area (numOverlapUEs), │
│           RB Utilizaion (rbUtilize)            │
│                    ]                           │
└─────────────────────────────────────────────┘
                      │
                      ▼
┌─────────────────────────────────────────────┐
│  Determine cell state (cellState) metric      │      232
│       based on cell info parameters            │
└─────────────────────────────────────────────┘
                      │
                      ▼
┌─────────────────────────────────────────────┐
│  Determine the RB allocation policy to be      │      233
│        deployed based on cellState             │
└─────────────────────────────────────────────┘
                      │
                      ▼
                   ◇ Is
              the selected policy                    234
                   currently
                  deployed?
                      │
                      │ No
                      ▼
┌─────────────────────────────────────────────┐
│   Send control message to activate            │      235
│    the selected RB allocation policy           │
└─────────────────────────────────────────────┘
```

**FIG. 15**

EP 4 460 065 A1

|  |  |  | | L | Start | R | | |
|---|---|---|---|---|---|---|---|---|---|
| 0 | 1 | 2 | 3 | 4 | 5 | 6 | 7 | 8 | 9 |
| PRB0 | PRB1 | PRB2 | PRB3 | PRB4 | PRB5 | PRB6 | PRB7 | PRB8 | PRB9 |

|  |  |  | L | | Start | R | | |
|---|---|---|---|---|---|---|---|---|---|
| 0 | 1 | 2 | 3 | 4 | 5 | 6 | 7 | 8 | 9 |
| PRB0 | PRB1 | PRB2 | PRB3 | PRB4 | PRB5 | PRB6 | PRB7 | PRB8 | PRB9 |

|  |  | L | | Start | | R | | |
|---|---|---|---|---|---|---|---|---|---|
| 0 | 1 | 2 | 3 | 4 | 5 | 6 | 7 | 8 | 9 |
| PRB0 | PRB1 | PRB2 | PRB3 | PRB4 | PRB5 | PRB6 | PRB7 | PRB8 | PRB9 |

|  |  | L | | Start | | | | R |
|---|---|---|---|---|---|---|---|---|---|
| 0 | 1 | 2 | 3 | 4 | 5 | 6 | 7 | 8 | 9 |
| PRB0 | PRB1 | PRB2 | PRB3 | PRB4 | PRB5 | PRB6 | PRB7 | PRB8 | PRB9 |

|  | L | | | Start | | | | R |
|---|---|---|---|---|---|---|---|---|---|
| 0 | 1 | 2 | 3 | 4 | 5 | 6 | 7 | 8 | 9 |
| PRB0 | PRB1 | PRB2 | PRB3 | PRB4 | PRB5 | PRB6 | PRB7 | PRB8 | PRB9 |

Final allocation: PRB4 to PRB8

**FIG. 16A**

**FIG. 16B**

EP 4 460 065 A1

L   Start   R

| 0 | 1 | 2 | 3 | 4 | 5 | 6 | 7 | 8 | 9 |
|---|---|---|---|---|---|---|---|---|---|
| PRB0 | PRB1 | PRB2 | PRB3 | PRB4 | PRB5 | PRB6 | PRB7 | PRB8 | PRB9 |

L   Start   R

| 0 | 1 | 2 | 3 | 4 | 5 | 6 | 7 | 8 | 9 |
|---|---|---|---|---|---|---|---|---|---|
| PRB0 | PRB1 | PRB2 | PRB3 | PRB4 | PRB5 | PRB6 | PRB7 | PRB8 | PRB9 |

L   Start   R

| 0 | 1 | 2 | 3 | 4 | 5 | 6 | 7 | 8 | 9 |
|---|---|---|---|---|---|---|---|---|---|
| PRB0 | PRB1 | PRB2 | PRB3 | PRB4 | PRB5 | PRB6 | PRB7 | PRB8 | PRB9 |

L   Start   R

| 0 | 1 | 2 | 3 | 4 | 5 | 6 | 7 | 8 | 9 |
|---|---|---|---|---|---|---|---|---|---|
| PRB0 | PRB1 | PRB2 | PRB3 | PRB4 | PRB5 | PRB6 | PRB7 | PRB8 | PRB9 |

L   Start   R

| 0 | 1 | 2 | 3 | 4 | 5 | 6 | 7 | 8 | 9 |
|---|---|---|---|---|---|---|---|---|---|
| PRB0 | PRB1 | PRB2 | PRB3 | PRB4 | PRB5 | PRB6 | PRB7 | PRB8 | PRB9 |

Final allocation: PRB4 to PRB8

**FIG. 16C**

**FIG. 17**

Europäisches
Patentamt

European
Patent Office

Office européen
des brevets

# EUROPEAN SEARCH REPORT

Application Number

EP 24 17 3079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DAE-HEE KIM ET AL: "Dynamic Frequency Reuse OFDMA Downlink Scheduling by Random Access Scheme", VEHICULAR TECHNOLOGY CONFERENCE FALL (VTC 2009-FALL), 2009 IEEE 70TH, IEEE, PISCATAWAY, NJ, USA, 20 September 2009 (2009-09-20), pages 1-5, XP031600229, ISBN: 978-1-4244-2514-3 * see sections I-III * | 1-13 | INV. H04W16/10 ADD. H04W88/08 H04W92/20 |
| Y | EP 3 869 847 A1 (INTEL CORP [US]) 25 August 2021 (2021-08-25) * paragraphs [0027], [0041], [0049], [0095], [0123] - [0124], [0134], [0141] - [0146] * | 1-13 | |
| Y | WO 2021/152632 A1 (STERLITE TECH LTD [IN]) 5 August 2021 (2021-08-05) * paragraphs [0011] - [0018], [0038] - [0039], [0054], [0062] - [0071]; claims 6-7, 22-23 * | 1-13 | |
| Y | US 2016/323077 A1 (YIN XIAOXUE [CN]) 3 November 2016 (2016-11-03) * paragraphs [0002], [0006] - [0007], [0032] - [0054], [0161] * | 1-13 | |

TECHNICAL FIELDS
SEARCHED        (IPC)

H04W

The present search report has been drawn up for all claims

| Place of search | Date of completion of the search | Examiner |
|---|---|---|
| Berlin | 13 September 2024 | Englund, Terese |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 3079

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2024

| Patent document cited in search report | Publication date | Patent family member(s) | Publication date |
|---|---|---|---|
| EP 3869847 A1 | 25-08-2021 | EP 3869847 A1 | 25-08-2021 |
| | | EP 4290917 A2 | 13-12-2023 |
| WO 2021152632 A1 | 05-08-2021 | NONE | |
| US 2016323077 A1 | 03-11-2016 | CN 104754744 A | 01-07-2015 |
| | | EP 3091800 A1 | 09-11-2016 |
| | | US 2016323077 A1 | 03-11-2016 |
| | | WO 2014187413 A1 | 27-11-2014 |

EPO FORM P0459

For more details about this annex : see Official Journal of the European Patent Office, No. 12/82

**EP 4 460 065 A1**

REFERENCES CITED IN THE DESCRIPTION

**Non-patent literature cited in the description**

- *3GPP TS 23.501 V 18.1.0,* 05 April 2023
- *3GPP TS 38.300 V 17.4.0,* 28 March 2023
- *3GPP TS 38.401 V 17.4.0,* 03 April 2023
- *3GPP TS 38.501 V 18.1.0,* 05 April 2023
- *3GPP TS 38.425 17.3.0,* 03 April 2023